Europäisches Patentamt

European Patent Office

Office européen des brevets

(19)

(11) **EP 0 714 023 B1**

(12) **EUROPÄISCHE PATENTSCHRIFT**

(45) Veröffentlichungstag und Bekanntmachung des Hinweises auf die Patenterteilung:
**02.07.2003   Patentblatt 2003/27**

(51) Int Cl.$^7$: **G01N 21/47**, G01N 1/28, G02B 5/00, B29D 11/00

(21) Anmeldenummer: **95890211.6**

(22) Anmeldetag: **21.11.1995**

(54) **Verfahren und Vorrichtung zur Bestimmung des Kohlegehaltes in Asche**

Method and device for the determination of the coal content of ash

Méthode et dispositif pour la détermination de la teneur en charbon de cendre

(84) Benannte Vertragsstaaten:
**BE CH DE DK ES FR GB IT LI NL SE**

(30) Priorität: **25.11.1994  AT  219594**
**30.03.1995  AT  57695**

(43) Veröffentlichungstag der Anmeldung:
**29.05.1996   Patentblatt 1996/22**

(73) Patentinhaber: **EVN AG**
**2344 Maria Enzersdorf (AT)**

(72) Erfinder:
 • **Aumüller, Adolf, Dipl-Ing. Dr.**
 **A-3500 Krems (AT)**
 • **Chabicovsky, Rupert, Dipl-Ing. Dr.**
 **A-3100 St. Pölten (AT)**
 • **Schneider, Alexander, Dipl-Ing.**
 **A-1120 Wien (AT)**

(74) Vertreter: **Weinzinger, Arnulf, Dipl.-Ing. et al**
**Sonn & Partner Patentanwälte**
**Riemergasse 14**
**1010 Wien (AT)**

(56) Entgegenhaltungen:
**EP-A- 0 475 431**        **WO-A-85/04957**
**AT-A- 348 802**         **DE-B- 1 000 615**
**GB-A- 742 970**         **NL-A- 6 803 476**
**US-A- 2 882 784**        **US-A- 4 486 363**
**US-A- 4 834 484**        **US-A- 5 062 709**
**US-A- 5 109 201**        **US-A- 5 224 978**

 • **SOROKO L M: "AXICONS AND MESO-OPTICAL IMAGING DEVICES" PROGRESS IN OPTICS, Bd. 27, 1.Januar 1989, Seiten 111-159, XP000606149**
 • **MANSELL D AND SAITO T: "DESIGN AND FABRICATION OF A NONLINEAR WAXICON" OPTICAL ENGINEERING, Bd. 16, Nr. 4, Juli 1977, Seiten 355-359, XP002049001**

EP 0 714 023 B1

**Beschreibung**

Die Erfindung betrifft ein Verfahren zur Bestimmung des Kohlegehalts in Asche, insbesondere in bei der Rauchgasreinigung von kalorischen Kraftwerken anfallender Flugasche, gemäß dem einleitenden Teil von Anspruch 1.

Sodann bezieht sich die Erfindung auf eine Vorrichtung zur Bestimmung des Kohlegehalts in Asche gemäß einem solchen Verfahren, entsprechend dem einleitenden Teil von Anspruch 8.

Die Bestimmung des Kohlegehalts in Asche ist nicht nur deshalb von Interesse, weil bei Feststellung eines relativ hohen Kohlegehalts auf eine ungenügende vorhergehende Verbrennung geschlossen werden kann, sondern darüber hinaus auch deshalb, weil Asche abhängig vom Restkohlegehalt auch einer Wiederverwendung zugeführt werden kann. So kann Asche, wenn sie einen genügend kleinen Prozentsatz an unverbrannter Kohle enthält, beispielsweise zur Zementherstellung oder als Füllmasse in Asphalt verwendet werden. Bei Kohlestaubfeuerungen und dergleichen, insbesondere in kalorischen Kraftwerken, ist daher eine laufende Messung des Kohlegehalts der Asche zweckmäßig, um einerseits Rückschlüsse auf die Einstellung der Feuerung aufgrund einer Tendenzerkennung (z.B. von Messung zu Messung steigender Kohlegehalt) ziehen zu können, und um andererseits die anfallende Flugasche in gesonderten Behältern je nach Kohlegehalt sortiert aufnehmen zu können.

Bekannte Techniken zur Bestimmung des Kohlegehalts in Flugasche basieren auf der Anwendung von Mikrowellen (vgl. z.B. US-5 109 201 A, US 5 177 444 A und US 4 705 409 A ) , wobei eine Flugasche-Probe mit Mikrowellen bestrahlt wird. Die Messung -kann dabei z.B. darauf beruhen, daß die von der Flugasche jeweils reflektierte bzw. durchgelassene Mikrowellenenergie erfaßt wird, wobei die festgestellte absorbierte Energie ein Maß für den Kohlegehalt ist (US 5 109 201 A) ; daß sowohl Dämpfung als auch Phasenverschiebung des durchgelassenen bzw. reflektierten Mikrowellensignals gegenüber dem ursprünglichen Mikrowellensignal bestimmt werden (US 5 177 444 A); oder daß eine aufgrund einer Verbrennung der Kohle in der Flugaschen-Probe infolge Mikrowellen-Bestrahlung bewirkte Erhitzung als Maß für den Kohlegehalt genommen wird (US 4 705 409 A). Diese bekannten Techniken sind jedoch apparativ ziemlich aufwendig, wobei trotzdem nur relativ ungenaue Messungen möglich sind.

Aus der DE 3 303 177 A ist weiters eine kapazitive Meßtechnik für die Bestimmung des Kohlegehalts von Flugasche bekannt geworden, bei der die Asche durch eine Meßkammer, zwischen zwei Meßkondensatorplatten, hindurchgeführt wird; der jeweilige Anteil an Kohle geht dabei in die Kapzitätsmessung ein. Auch hier sind jedoch nur relativ ungenaue Meßergebnisse erzielbar, da auch hier andere Parameter, wie die Dichte der Asche sowie andere die Gesamt-Dielektrizitätskonstante des Kondensators beeinflussende, in ihrem Gehalt variierende Aschen-Bestandteile unberücksichtigt bleiben.

Ein eher aufwendiges Verfahren zur Kohlegehalt-Bestimmung, nämlich auf Basis von fotoakustischer Absorptionsspektrometrie, ist in der US 5 069 551 A beschrieben. Dabei wird ein Anregungslaserstrahl durch eine Meßkammer gerichtet, die von einem Gas-Partikel-Gemisch mit hoher Geschwindigkeit durchströmt wird. Durch die Lichtabsorption werden die Partikel periodisch erwärmt, was zur Erzeugung von Schallwellen führt, die mit einem Mikrofon aufgenommen werden.

DE-1 000 615 B offenbart ein Verfahren zur Bestimmung des Gehaltes an Unverbranntem in Flugasche durch Messung der Intensität eines an der Asche reflektierten lichtstrahlenbündels.

Schließlich wurde bereits vorgeschlagen (M & W Asketeknik ApS, Dänemark, Prospekt "Restkohlenmeßgerät"), zur Kohlegehalt-Messung eine Ascheprobe direkt dem Rauchgaskanal, noch vor der Zuführung zu üblichen Elektrofiltern, zu entnehmen und optisch hinsichtlich Reflexionsvermögen zu untersuchen, wobei aus dem Reflexionsvermögen der Probe auf den Kohlegehalt geschlossen wird. Nach Durchführung der Messung wird die Ascheprobe mit Hilfe von Druckluft in den Rauchgaskanal zurückgeblasen, und eine neue Messung kann durchgeführt werden. Der Meßzyklus liegt dabei im Bereich von einigen Minuten, etwa bis zu 15 Minuten, und das Meßergebnis wird in einem Rechner ausgewertet. Dabei ist auch vorgeschlagen worden, für jede Ascheprobe eine Mittelung von mehreren Meßergebnissen vorzunehmen, um so ein möglicherweise stabileres Meßergebnis zu erhalten. Jedoch trägt die bekannte Technik weder dem Umstand Rechnung, daß die Partikel in der Flugasche verschiedene Größen haben können, wobei dies einen Einfluß auf das Meßergebnis hat, noch wird bei dieser bekannten Vorgangsweise berücksichtigt, daß in Asche üblicherweise Eisenoxid-Bestandteile vorhanden sind, die ebenso wie Kohle dunkel bzw. schwarz sind und somit das gesamte Reflexionsvermögen herabsetzen. Insbesondere ist hier von Bedeutung, daß beträchtliche Meßwertverfälschungen darauf zurückzuführen sind, daß die Kohlepartikel und übrigen Aschepartikel verschieden groß sind, und daß die ebenfalls dunklen Eisenoxidpartikel praktisch wie Kohlepartikel mitgemessen werden.

Ganz allgemein ist bei natürlichen Aschen, die z.B. von verschiedenen Kohlen herrühren, nicht nur der Kohlenstoffanteil variabel, sondern auch der Eisenoxidgehalt, das spezifische Gewicht, der Brechungsindex und unter Umständen auch der Wassergehalt. Wenn in Laboranalysen der Gewichtsanteil von Kohlenstoff ermittelt wird, so unterscheiden sich diese Laboranalysen immer wieder ganz wesentlich vom Ergebnis auf Basis der Reflexionsmessungen, die ein Maß für die oberflächliche Schwärzung und damit anstatt einer gewichtsbezogenen eine volumenbezogene Größe liefert, wobei Streuungen im Gewicht-Volumen-Verhältnis der Ascheproben zu Streuungen im Meßergebnis führen. An sich hat aber selbstverständlich die erwähnte Reflexionsmessung gegenüber den Laboranalysen den Vorteil, daß sie direkt an Ort und Stelle bei laufendem Betrieb erfolgen kann, so daß unmittelbare Auswertungen und Reaktionen im Sinne von Einstellungsänderungen der Feuerung möglich sind.

Der mittlere Brechungsindex, also der Mittelwert der Brechungsindizes der Aschebestandteile, bestimmt das Streuvermögen der Aschepartikel und damit die Eindringtiefe des Lichts. Je größer diese ist, desto mehr wird von dem eingestrahlten Licht absorbiert und desto geringer ist die Reflexion. Wenn Ascheproben Feuchtigkeit aus der Luft aufnehmen, so füllen eingelagerte Wassertröpfchen die Hohlräume zwischen den Ascheteilchen aus und verringern damit die Brechungsindexunterschiede, weil zwischen Quarz und Wasser ein geringerer Unterschied der Brechungsindizes besteht als zwischen Quarz und Luft. Dadurch sinkt wiederum das Streuvermögen, die Eindringtiefe und die Absorption nehmen zu, der reflektierte Anteil sinkt. Das dunkle Eisenoxid tritt ferner in verschiedenen Modifikationen auf, die teilweise schwarz, teilweise braun oder rot sind, von denen manche ferromagnetisch sind und andere nicht. Demgemäß ist die Messung von Kohlenstoff in Flugasche durch Reflexion zwar theoretisch exakt durchführbar, in der Praxis führen allerdings zahlreiche Störgrößen zu Meßungenauigkeiten.

Es ist nun Ziel der Erfindung, ein Verfahren zur Bestimmung des Kohlegehaltes in Asche sowie eine Vorrichtung hierfür, wie eingangs angeführt, vorzusehen, mit dem bzw. mit der unter weitweitgehender Ausschaltung der genannten Störgrößen eine verläßliche laufende Ermittlung des Kohlegehalts in Asche, insbesondere Flugasche, auf Basis einer Reflexionsmessung ermöglicht wird.

Des weiteren ist es Ziel der Erfindung, die Messungen in ausreichend kurzer Zeit, insbesondere in einigen wenigen Minuten, etwa 5 bis 10 Minuten, durchführen zu können, wobei an sich in der Regel bei der Messung von Flugasche in kalorischen Kraftwerken 4 oder 5 Messungen pro Stunde maximal erforderlich sind (abhängig davon, wieviel Asche laufend anfällt).

Das erfindungsgemäße Verfahren zur Bestimmung des Kohlegehalts in Asche zeichnet sich durch die im Anspruch 1 angegebenen Merkmale aus.

In entsprechender Weise sieht die Erfindung zur Lösung der gestellten Aufgabe eine Vorrichtung mit den Merkmalen von Anspruch 8 vor.

Vorteilhafte Ausgestaltungen und Weiterbildungen der Erfindung sind in den Unteransprüchen angegeben.

Bei der vorliegenden Meßtechnik handelt es sich somit nicht bloß um eine einfache Reflexionsmessung, vielmehr werden die Kohlepartikel zerkleinert bzw. zerrieben, wobei sich das Reflexionsvermögen ändert und diese Änderung in die Auswertung bei der Bestimmung des Kohlegehalts eingeht. Das Zerkleinern bzw. Zerreiben der Kohlepartikel bewirkt eine Zunahme der Absorption, da die absorbierende Fläche der Ascheprobe vergrößert wird, und demgemäß nimmt das Reflexionsvermögen bei dieser Kohlekörnerzerkleinerung ab. Unter "Reflexion" wird dabei insbesondere die diffuse Reflexion verstanden. Reguläre, spiegelnde Reflexion bildet hingegen eine Störgröße: Kohle "glänzt" mehr oder weniger stark, d.h. es ist ein relativ hoher Anteil an spiegelnder Reflexion gegeben, welcher die Meßergebnisse unbrauchbar machen würde. Daher wird zweckmäßigerweise diese spiegelnde Reflexion ausgeschaltet, insbesondere durch gekreuzte Polarisationsfilter im Bereich der Strahlungsquelle bzw. Strahlungsempfänger. Als Strahlung wird bevorzugt rotes sichtbares Licht verwendet, da Versuche gezeigt haben, daß bei Verwendung dieser Lichtart die günstigsten Verhältnisse für die Messung des Reflexionsvermögens von Asche mit Kohlepartikeln gegeben sind.

Bei der vorliegenden Meßtechnik wird eine Unabhängigkeit von wesentlichen Hintergrundeinflüssen erzielt, so daß im Vergleich zur bekannten Meßtechnik wesentlich verläßlichere Meßergebnisse erhalten werden. Dabei kann die weiter unten noch genauer erläuterte Differenz zwischen den mindestens zwei Messungen des Reflexionsvermögens, im folgenden kurz Differenzwert genannt, für die Auswertung herangezogen werden. Im Prinzip können selbstverständlich beliebig viele Reflexionsvermögen-Messungen, bei unterschiedlichen Mahlgraden, vorgenommen werden, und insbesondere ist es möglich, einen Kurvenverlauf des Reflexionsvermögens in Abhängigkeit vom Mahlgrad der Flugasche aufzunehmen und den gesamten Kurvenverlauf zur Bestimmung des Kohlegehalts auszuwerten.

Die Asche im Behälter kann mit Hilfe des Stempels, durch dessen durchlässige Stirnseite das Licht zugeführt bzw. das diffus reflektierte Licht empfangen wird, einfach in der Art eines Mörsers zerrieben werden. Dabei wird zwar ein Zerkleinern der Kohlepartikel herbeigeführt, jedoch werden die übrigen Bestandteile (Oxide) der Flugasche praktisch nicht zerrieben. Für den Differenzwert werden in Abhängigkeit vom Grad der Zerkleinerung der Kohlepartikel je nach Eisenoxidgehalt verschiedene Ergebnisse erhalten, da bei einem hohen Eisenoxidgehalt viele schwarze, nicht zerriebene Partikel vorhanden sind und der Effekt der Oberfächenvergrößerung der schwarzen Partikel durch das Zerreiben der Kohlekörner sich schwächer auswirkt als bei einem geringen Eisenoxidgehalt. In letzterem Fall ist die relative Oberflächenvergrößerung der schwarzen Partikel beim Zerreiben der Kohlekörner stärker gegeben, und die Kurve, die den funktionellen Zusammenhang zwischen dem Reflexions-Differenzwert und dem C-Gehalt darstellt, ist daher steiler als in dem Fall, wo ein relativ hoher Eisenoxidgehalt vorhanden ist. Es ist daher auch zweckmäßig, daß zur Korrektur der Reflexionsmessung eine Bestimmung des Eisenoxidgehalts, beispielsweise mittels einer Induktivitätsmessung, vorgenommen wird. Dabei kann eine schnelle, näherungsweise, jedoch ausreichend genaue Bestimmung des Eisenoxidgehaltes dadurch erzielt werden, daß eine Luftspule mit Asche befüllt und die dadurch bewirkte Induktivitätsänderung als Maß für den Eisenoxidanteil genommen wird. Es treten alle Formen von Eisenoxid auf, nämlich FeO (schwarz), $Fe_2O_3$ (rot bis schwarz) in seinen beiden Modifikationen $\alpha$-$Fe_2O_3$ (paramagnetisch) und $\gamma$-$Fe_2O_3$ (ferromagnetisch) und $Fe_3O_4$ (schwarz, ferromagnetisch). Ein Vergleich der Induktivitätsmethode mit einer Eisenanalyse im Labor ergab eine eindeutige und ausreichend scharfe Korrelation zwischen Induktivitätsänderung und Eisenoxidgehalt.

Wie erwähnt kann aus der Zunahme der Schwärzung der Ascheprobe beim Zerreiben und somit aus der Abnahme des Reflexionsvermögens (dem Differenzwert) verläßlich auf den Kohlegehalt der Ascheprobe, mit dem Eisenoxidanteil als Parameter, geschlossen werden, wobei als zusätzlicher Meßwert, abgesehen von diesem Differenzwert, zweckmäßigerweise das Ergebnis der nachfolgenden, d.h. nach Zerkleinerung der Kohlepartikel vorgenommenen, Reflexionsvermögen-Messung herangezogen wird.

Um beim Zerkleinern der Partikel bei den verschiedenen Messungen eindeutig aufeinander bezogene schwarze bzw. weiße Oberflächenanteile sicherzustellen, ist ein Mischen oder dergl. der Asche zwischen den Messungen möglichst hintanzuhalten, und demgemäß ist es von besonderem Vorteil, wenn die Ascheprobe vor den Messungen gepreßt wird. Die Ascheprobe bleibt dabei zweckmäßigerweise während des gesamten Zerkleinerungs- und Meßvorganges gepreßt.

Untersuchungen haben ergeben, daß beim Zerreiben der Ascheprobe zuerst in der Regel ein kurzer, schneller Anstieg im Reflexionsvermögen zu beobachten ist, und erst dann, bei zunehmendem Zerkleinern der Partikel, kommt es zu dem beschriebenen Abfall im Reflexionsvermögen. Ab einem gewissen Zerkleinerungsgrad läßt sich dann ein fast linearer Abfall des Reflexionsvermögens bei stetiger Fortsetzung des Zerreibens beobachten. Beispielsweise hatten bei einer konkreten Ascheprobe die einzelnen Partikel im unzerriebenen und nur gepreßten Zustand eine mittlere Korngröße in Draufsicht von 120 $\mu m^2$ (gemessen an einem Bildanalyse-Arbeitsplatz mit Mikroskop) und nach einem ersten Mahlvorgang eine mittlere Partikelgröße von 100 $\mu m^2$, wobei bei dieser mittleren Partikelgröße eine erste Reflexionsvermögen-Messung vorgenommen wurde. Danach wurde die Probe weiter zerrieben, bis die Kohlepartikel eine ungefähre mittlere Korngröße von 90 $\mu m^2$ aufwiesen, und es wurde nunmehr die zweite Reflexionsmessung vorgenommen, wobei die hier gemessene Reflexion sowie der Differenzwert (1. Meßwert - 2. Meßwert) in den Algorithmus zur Ermittlung des Kohlegehalts der Asche einbezogen wurden. Die Ascheprobe sollte somit bereits vor der ersten Reflexionsvermögen-Messung teilweise und nach dieser Messung weiter zerrieben werden.

Bei der vorliegenden Sondenvorrichtung kann weiters der mit den optischen Elementen zur Strahlungszuführung bzw. zur Aufnahme der reflektierten Strahlung ausgestattete und zum Pressen und Zerreiben eingesetzte Stempel mit einem am Rahmen oder Gehäuse angebrachten Linearantrieb, insbesondere Druckmittelzylinder, gekuppelt und durch diesen zum Ascheproben-Behälter hin und von diesem zurück bewegbar sein. Dabei kann ein einfacher, kleiner Druckmittelzylinder eingesetzt werden. Mit Hilfe dieses Linearantriebs, insbesondere Druckluftzylinders, kann nicht nur der Stempel nach dem Füllen des Ascheproben-Behälters an diesen heranbewegt werden, sondern es kann dadurch auch die gewünschte Pressung der Asche vorgenommen werden. Nach Durchführung der Messungen wird der Stempel dann wieder vom Behälter zurückbewegt, so daß die Ascheprobe aus dem Behälter entfernt werden kann.

Im weiteren wird der Stempel einfach mit einem im Rahmen oder Gehäuse angebrachten Drehantrieb ausgestattet, um die Asche im Behälter durch einfaches Drehen des Stempels relativ zum Behälter zu zerreiben. Dabei kann es sich um einen kontinuierlich drehenden Antrieb handeln, was jedoch hinsichtlich der Strom- bzw. Strahlungs-(licht)-zuführung zur Stempel-Stirnseite besondere Anschlüsse und Kupplungen erforderlich macht. Es hat sich daher als ganz besonders günstig erwiesen, wenn der Stempel mit einem im Rahmen oder Gehäuse angebrachten hin- und hergehenden Drehantrieb zum Zerreiben der Asche im Behälter durch hin- und hergehende Drehbewegungen gekuppelt ist. Der Drehantrieb kann dabei weiters einfach mit einem Elektromagnet ausgeführt sein.

Vorzugsweise ist der Ascheproben-Behälter durch einen Probenteller gebildet; der Probenteller kann dabei unmittelbar als untere steife Abschlußplatte des Rahmens oder Gehäuses ausgeführt sein. Der Stempel selbst kann allgemein zylindrisch ausgeführt sein, und dem Ascheproben-Behälter wird mit Vorteil ein Ausblaserohr zum Ausblasen der gepreßten, gemahlenen Asche nach den Reflexionsmessungen zugeordnet; dieses Ausblaserohr kann dabei seitlich oberhalb und neben der offenen Oberseite des Ascheproben-Behälters bzw. Probentellers ausmünden, so daß es bei der Bewegung des Stempels kein Hindernis bildet.

Für die Meßwertaufnahme hat es sich als günstig erwiesen, wenn mehrere Strahlungsaufnehmer bzw. -empfänger in einer kreisförmigen Anordnung um eine mittige Strahlungsquelle herum angeordnet sind. Dabei ist es im Hinblick darauf, daß zum Zerreiben der Partikel vorzugsweise der Stempel drehend angetrieben wird, wodurch im mittleren Bereich des Stempels kein oder nur ein geringfügiges Zerreiben erfolgt, weiters von besonderem Vorteil, wenn der mittlere Bereich des Fensters benachbart der mittigen Strahlungsquelle lichtundurchlässig ist, so daß im genannten mittleren Bereich, wo kein Zerreiben der Aschepartikel erfolgt, keine Reflexionsmessung vorgenommen wird.

Um den Einfluß von Schwankungen in der von der Strahlungsquelle abgegebenen Strahlung, etwa zufolge von Temperaturschwankungen und dergl., auf das Meßergebnis ausschalten zu können, ist es ferner auch günstig, wenn einer der Strahlungsaufnehmer bzw. -empfänger direkt der Strahlungsquelle zu deren Strahlungsemissions-Überwachung und zur Gewinnung eines Referenzwertes für die Reflexionsmessung zugeordnet ist.

Im Hinblick auf die Ausschaltung von spiegelnder Reflexion hat es sich hier ferner als vorteilhaft erwiesen, wenn am Fenster konzentrisch zwei bezüglich ihrer Polarisationsrichtungen um 90° gedrehte Polarisationsfilter angebracht sind.

Um weiters eine hohe Temperaturstabilität trotz der relativ schwierigen Meßumgebung (warme Asche, Erwärmung durch den Drehantrieb für den Stempel) sicherzustellen, ist es auch von Vorteil, wenn der Stempel mit einem Wasser-Kühlkörper ausgerüstet ist.

Zur Verhinderung der Messung von Reflexionen aus dem mittleren Bereich der Ascheprobe ist es auch vorteilhaft, wenn im Strahlengang von der Strahlungsquelle zur Ascheprobe ein Strahlungsablenkelement angeordnet ist, welches ein in die Strahlungs-Eintrittsseite des Strahlungsablenkelementes eintretendes Strahlungsbündel in ein im Querschnitt allgemein ringförmiges Strahlungsbündel an der Strahlungs-Austrittsseite des Strahlungsablenkelementes umformt. Bei dieser Lösung wird somit eine Aufweitung des Strahlungsbündels zu einem Ringquerschnitt herbeigeführt (und es wird dadurch bei der Reflexionsmessung nur die außerhalb des zentralen Bereichs der Ascheprobe liegende ringförmige Zone erfaßt), anstatt daß der zentrale Teil des Strahlungsbündels abgeblendet wird. Dadurch kann auch eine vergleichsweise hohe Lichtausbeute bzw. Effizienz erzielt werden.

Das zur Strahlaufweitung vorgesehene Strahlungsablenkelement kann an sich auf verschiedene Weise realisiert werden, insbesondere mit Licht-brechenden, aber gegebenenfalls auch mit Licht-reflektierenden Flachen. Im Hinblick auf eine besonders einfache und effiziente Ausbildung hat es sich jedoch als vorteilhaft erwiesen, wenn das Strahlungsablenkelement ein Glaskörper ist, welcher an der Strahlungs-Eintrittsseite eine in Richtung der optischen Achse der Strahlungsquelle ausgerichtete, sich zu einer punktförmigen Spitze verengende, insbesondere allgemein kegelförmige Vertiefung aufweist. Durch die Brechung des von der Strahlungsquelle ausgehenden Strahlungsbündels an den Grenzflächen an der Strahlungs-Eintritts- und -Austrittsseite des Glaskörpers ergibt sich in vorteilhafter Weise auf der Aschenprobe im zentralen Bereich ein unbeleuchteter Fleck, der von einem hell beleuchteten Ring begrenzt wird. Da das Zerreiben der Asche wie erwähnt bevorzugt durch Drehung eines zylindrischen Stempels erfolgt, bilden sich in der Aschenprobe kreisförmige Zonen mit unterschiedlichem, zum Zentrum hin abnehmendem Mahlgrad. Es ist daher von Vorteil, wenn die Vertiefung im Querschnitt kreisförmig ist, sodaß sich auch ein Lichtfleck in Form eines kreisrunden Ringes ergibt.

Zweckmäßigerweise liegt der Scheitelwinkel der Vertiefung im Bereich von 60° bis 120°, vorzugsweise allgemein 90°. Der Glaskörper kann ferner auf der Strahlungs-Austrittsseite eine allgemein plane oder konvexe Grenzfläche aufweisen. Die Vertiefung im Glaskörper kann auch zur Erzielung besonderer Lichtablenkeffekte eine konkav gekrümmte, insbesondere sphärisch gekrümmte Mantelfläche aufweisen. Durch diese Maßnahmen kann der Strahlengang durch den Glaskörper und damit auch die Lage und Größe des beleuchteten Ringes in besonders zweckmäßiger Weise festgelegt werden.

Vorzugsweise besteht der Glaskörper aus Acrylglas, wodurch eine thermische Verformbarkeit gegeben ist.

Von besonderem Vorteil ist es auch, wenn der Glaskörper mit seiner äußeren Umfangsfläche mit Hilfe eines optischen Klebers, dessen Brechungsindex jenem des Glaskörpers zumindest im wesentlichen, d.h. soweit entspricht, daß Totalreflexion unterdrückt wird, in einen zumindest an der Befestigungsfläche schwarz eloxierten Halter eingeklebt ist.

Das Strahlungsablenkelement kann einfach so hergestellt werden, daß ein allgemein blockförmiger, kegelstumpfförmiger oder prismatischer Glaskörper aus Acrylglas bereitgestellt wird, in den mit einem spitzen, erhitzten Werkzeug, wie einer Stahlspitze, eine kegelförmige Vertiefung durch Eindrücken thermisch eingeformt wird, und daß das Werkzeug nach seinem Abkühlen aus dem Glaskörper gehoben wird. Bei diesem Verfahren hat es sich weiters als zweckmäßig erwiesen, wenn das Werkzeug auf eine Temperatur von 120°C bis 130°C erhitzt wird, und/oder wenn das Werkzeug vor dem Eindrücken mit Silikonöl benetzt wird.

Die Erfindung wird nun nachstehend anhand der Zeichnung und unter Bezugnahme auf bevorzugte. Ausführungsbeispiele, auf die sie jedoch nicht beschränkt sein soll, noch weiter erläutert. In der Zeichnung zeigen im einzelnen:

Fig.1 einen schematischen Axialschnitt durch eine für die vorliegende Reflexions-Differenzmessung geeignete Sensorvorrichtung;

Fig.2 einen schematischen Axialschnitt durch einen bei dieser Sensorvorrichtung gemäß Fig.1 bevorzugt eingesetzten wassergekühlten Sensorkörper-Stempel;

Fig.3 eine schematische Unteransicht einer Scheibe mit Polarisationsfilter und Blende innerhalb des Stempels der Sensorvorrichtung gemäß Fig.1;

Fig.4 eine schematische Darstellung zur Veranschaulichung der Anordnung der optischen Elemente bei diesem Stempel;

Fig.5 eine schematische Darstellung zur Veranschaulichung der Anordnung optischer Elemente einschließlich Strahlungsablenkelement beim Stempel gemäß einer weiteren Ausführungsform;

Fig.6 eine schematische Unteransicht einer Scheibe mit Polarisationsfilter bei der Ausführungsform nach Fig.5;

Fig.7 eine modifizierte Ausführungsform eines Strahlungsablenkelements nach Fig.5;

Fig.8 ein Schema zur Veranschaulichung der Anbringung und Ansteuerung einer Sensorvorrichtung in Zuordnung zu einem Ascheaustrag eines kalorischen Kraftwerkes;

Fig.9 in den einzelnen Darstellungen Fig.9A bis 9I ein Ablaufdiagramm zur Veranschaulichung des Vorgangs bei der Kohlegehalt-Messung mit der Sondenvorrichtung gemäß Fig.1 bis 4 und 8;

Fig.10 ein Diagramm zur Veranschaulichung des auf diese Weise gemessenen Kohlegehalts C1 in Relation zu dem im Labor durch entsprechende Analysen festgestellten Kohlegehalt C;

Fig.11 ein Diagramm zur Veranschaulichung des Reflexions-Differenzwertes $\Delta R$ über dem Kohlegehalt C, in Abhängigkeit vom jeweiligen Eisenoxidgehalt;

Fig.12 in einem Ablaufdiagramm mit den einzelnen Darstellungen Fig.12A bis 12C den Vorgang bei der Messung der Induktivität der Asche, zwecks Bestimmung des Eisenoxid-Anteils;

Fig.13 in einem Diagramm die Änderung $\Delta L$ der Induktivität einer Luftspule beim Befüllen mit Flugasche in Relation zum Eisenoxidgehalt der Asche;

Fig.14 in einem Diagramm die Abhängigkeit des diffusen Reflexionsvermögens R vom Verhältnis aus Absorption K zu Rückstreuung S;

Fig.15 in einem Diagramm den Reflexions-Differenzwert $\Delta R$ als Funktion des Anteils a an schwarzen Körpern in der Asche;

Fig.16 eine beispielsweise Meßkurve des Reflexionsvermögens (in Form des durch die Fotodioden aufgenommenen Stroms I) über dem Mahlgrad (in Form der Zahl z der Drehungen des Stempels) bei einem gegebenen C-Gehalt; und

Fig.17 in einem Flußdiagramm die rechnerische Ermittlung des Kohlegehalts aus den Meßwerten mit Hilfe eines aufgrund theoretischer Überlegungen experimentell ermittelten Algorithmus, der sich in der Praxis bewährt hat.

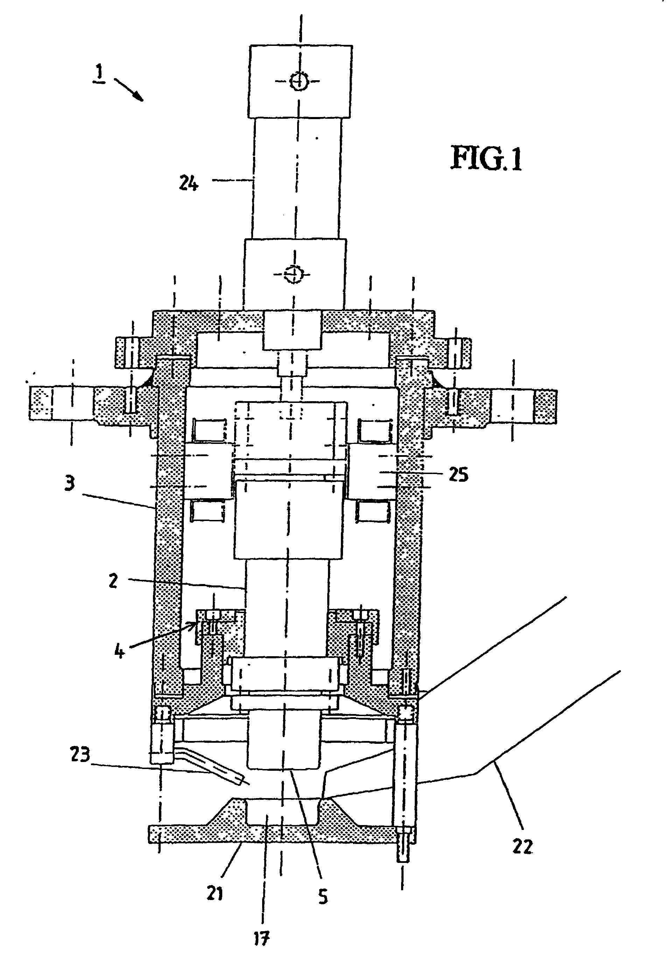

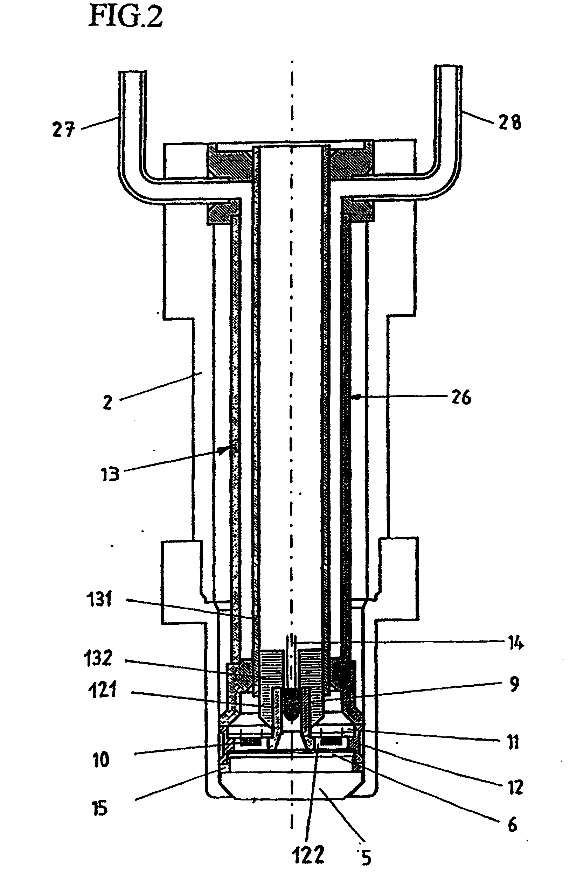

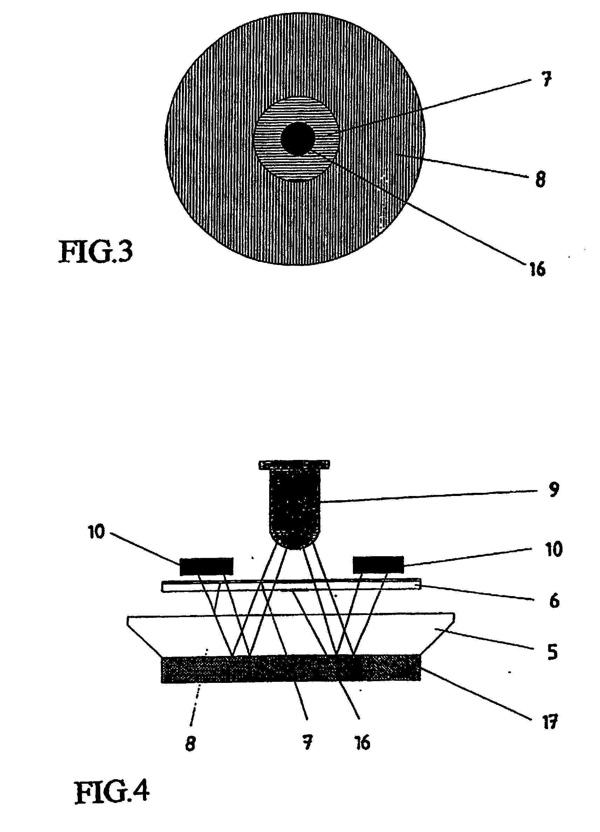

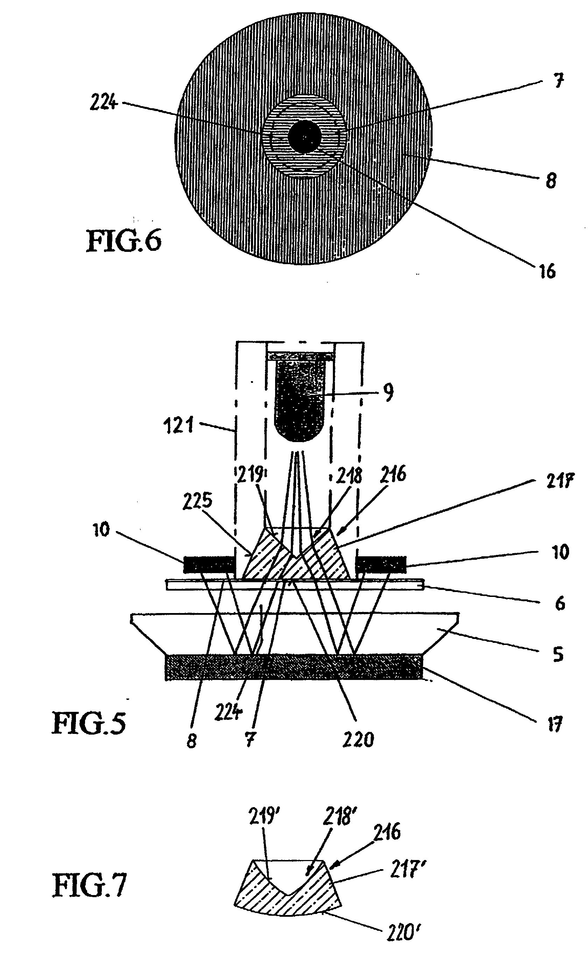

Fig.1 zeigt schematisch eine Sensorvorrichtung 1, bei der ein die noch zu beschreibenden optischen Elemente, die in Fig.2 und 4 bzw. 5 bis 7 näher gezeigt sind, enthaltender Körper in Form eines Stempels oder Meßzylinders 2 innerhalb eines starren zylindrischen Gehäuses 3 mit Hilfe einer Axial- und Radial-Lagereinrichtung 4 sowohl geradlinig, in Achsrichtung, bewegbar als auch um seine Längsachse drehbar gelagert ist. Der Stempel 2 trägt an seiner Stirnseite eine ihn dort abschließende z.B. 7 mm dicke Glasplatte 5. Dahinter befindet sich, wie aus Fig.2 ersichtlich ist, im Abstand von einigen mm eine weitere dünne Glasscheibe 6, auf welcher Polarisationsfolien 7, 8 aufgeklebt sind, vgl. auch Fig.3. Die Polarisationsrichtungen dieser Polarisationsfolien oder -filter sind dabei um 90° gegeneinander versetzt, und die eine Polarisationsfolie 7 ist für den Lichtaustritt, die andere, 8, hingegen für den Lichteintritt in den Sensor vorgesehen. Ein in der Mitte der Polarisationsfilteranordnung 7, 8 angeordnetes Strahlungsablenkelement 216 (Fig.5 und 7) bzw. eine Blende 16 (Fig.3 und 4) verhindert, daß der zentrale Bereich der Ascheprobe 17, der bei der hin- und hergehenden Drehbewegung des Stempels 2 nicht zerrieben wird, beleuchtet wird und einen Beitrag zum zu messenden Reflexionssignal liefert, wie anschließend erläutert wird. Unmittelbar hinter der Glasscheibe 6 sind, eine - vorzugsweise sichtbares rotes Licht abgebende - Leuchtdiode 9 als Strahlungsquelle, Fotodioden 10 als Strahlungsempfänger und vier zur Temperaturüberwachung dienende Pt 100-Widerstände (nicht näher dargestellt) angeordnet. Eine ringförmige Platine 11, welche diese Bauelemente trägt, ist in einem Aluminium-Drehteil 12 mit einem mittigen, büchsenartigen Fortsatz 21 befestigt, in dessen mittiger Bohrung am oberen Ende die Leuchtdiode 9 eingesteckt sind (s. Fig.2). Der Alu-Drehteil 12 weist Druchbrechungen 122 für die Fotodiode 10 und die Pt 100-Widerstände auf. Auf dem Alu-Drehteil 12 sitzt ein zylindrischer, doppelwandiger Kühlkörper 13 in Form eines doppelwandigen Rohrs 26 auf. Zwischen den Wänden des Kühlkörpers 13 fließt ein Kühlmedium, z.B. Wasser, und im mittleren Bereich des Kühlkörpers 13 werden Anschlußdrähte für die Stromversorgung bzw. Meßwertübertragung nach außen geführt, was in Fig.2 allerdings nur hinsichtlich der LED 9 schematisch bei 14 angedeutet ist. In das untere Ende des Innenrohres 131 des doppelwandigen Kühlkörpers 13 ist eine Traghülse 132 eingefügt, deren zentrale Bohrung zur Aufnahme des Fortsatzes 121 des Drehteils 12 dient, wobei beide Teile 12, 132 aus gut wärmeleitendem Material bestehen.

Der mit Luft gefüllte Raum zwischen der Glasplatte 5 des Stempels 2 und der die Polarisationsfolien 7, 8 tragenden Glasscheibe 6 ist abgedichtet, vgl. z.B. die aus Fig.2 ersichtliche ringförmige Dichtung 15.

Wie aus Fig.3 oder Fig.6 erkennbar ist, sind als Polarisationsfolien zwei kreisringförmige, ineinander angeordnete Polarisationsfilter 7, 8, gemäß Fig.3 zusammen mit der mittigen, strahlungsundurchlässigen Blende 16, auf der Glasscheibe 6 angebracht. Die beiden Polarisationsfilter 7, 8 sind wie erwähnt bezüglich ihrer Polarisationsrichtungen um 90° zueinander versetzt, wobei diese Anordnung beispielsweise dadurch erhalten werden kann, daß auf der Glasscheibe 6 eine Polarisationsfolie aufgeklebt wird, deren mittlerer Teil 7 zuvor ausgestanzt und um 90° gedreht wurde. Beim Aufkleben der gekreuzten Polarisationsfilter 7, 8 ist auf ein sauberes, blasenfreies Anhaften zu achten.

Die zentrale strahlungsundurchlässige Blende 16 gemäß Fig.3 kann beispielsweise in Form einer dünnen Metallschicht aufgesputtert werden.

Aus der schematischen Darstellung von Fig.4 ist weiters ersichtlich, daß hinter der kreisrunden Glasscheibe 6 mittig die Leuchtdiode 9, welche z.B. eine Strahlung mit einer Wellenlänge $\lambda=660$ nm und einer Lichtstärke von 0,5 cd abgibt, angeordnet ist, wobei rund um diese Leuchtdiode 9 die sechs Fotodioden 10 angeordnet sind, von denen fünf die Asche 17 sehen, eine hingegen davon abgeschirmt ist. Diese sechste Fotodiode ist durch einen freigefrästen Kanal (nicht ersichtlich) zur Leuchtdiode 9 hin ausgerichtet, um deren gleichmäßige Lichtemission zu überwachen. Auf diese Weise können in gewissem Ausmaß durch Temperaturschwankungen verursachte Fehler ausgeregelt werden, wobei die Abnahme des Fotostroms mit steigender Temperatur im gleichen Ausmaß für die fünf Meß-Fotodioden 10 wie für die eine Referenz-Fotodiode erfolgt. Der Strom der Leuchtdiode 9 kann dann derart nachgeregelt werden, daß der Fotostrom der Referenz-Fotodiode konstant bleibt.

Aus Fig.1 ist weiters ersichtlich, daß eine Ascheprobe 17 in einem eigenen Behälter in Form eines Probentellers 21 mit einer plattenförmigen Basis untergebracht wird, wobei dieser Probenteller 21 starr mit dem Gehäuse 3 der Sensorvorrichtung 1 verbunden ist. Zur Probenzuführung mündet seitlich ein Zuführrohr 22, und zum Entfernen der Ascheprobe 17 aus dem Probenteller 21 nach den Messungen dient eine Ausblasevorrichtung mit wenigstens einem Ausblaserohr oder einer Düse 23, die seitlich und oberhalb des Aufnahmeraums für die Ascheprobe 17 ausmündet.

Der Stempel 2 ist an seinem hinteren Ende mit einem als Linearantrieb vorgesehenen Druckluftzylinder 24 gekuppelt, so daß er von diesem nach unten, zum Teil in den Probenteller 21 hinein, und von diesem Probenteller 21 wieder zurück axial bewegt werden kann. Weiters ist im Gehäuse 3 eine Elektromagnet-Drehantriebseinrichtung 25 vorgesehen, mit deren Hilfe der Stempel 2 um wenige Grad hin- und hergehend verdreht werden kann, um dann, wenn er mit seiner vorderen Stirnseite, an der das Glasfenster mit der Glasplatte 5 angebracht ist, in den Ascheproben-Aufnahmeraum des Probentellers 21 hinein verstellt worden ist, die so gepreßte Ascheprobe 17 zu zerreiben. Die zentrale, strahlungsundurchlässige Blende 16 bzw. das Strahlungsablenkelement 216 in der Mitte der Polarisationsfilteranordnung 7, 8 verhindert, daß der zentrale Bereich der Ascheprobe 17, der bei der hin- und hergehenden Drehbewegung des Stempels 2 nicht zerrieben wird, beleuchtet wird und einen Beitrag zum zu messenden Reflexionssignal liefert.

Im Betrieb wird die Ascheprobe 17 mit von der Lichtquelle 9 stammendem, nach Durchtritt durch das Polarisationsfilter 7 linear polarisierten Licht bestrahlt; eine spiegelnde Reflexion bewirkt keine Änderung der Polarisationsrichtung, und diese spiegelnde Reflexion geht somit nicht in die Messung ein, da das spiegelnd reflektierte Licht nicht durch den äußeren Polarisationsfilterbereich 8 zu den Fotodioden 10 hindurchtreten kann, sondern abgeblockt wird (gekreuzte Polarisatoren). Diffuse Reflexion hingegen wirkt entpolarisierend, so daß der diffuse Reflexionsanteil durch den Polarisationsfilterbereich 8 durchtritt.

Abgesehen von den unterschiedlichen Temperaturen der Ascheproben 17 bewirkt auch der Elektromagnet der Drehantriebseinrichtung 25 eine Temperatur der Fotodioden 10 einen starken Einfluß auf die Beweglichkeit der Ladungsträger im Halbleitermaterial und damit auf den Fotostrom hat, ist es zweckmäßig, die Temperatur möglichst konstant zu halten. Demgemäß wird für den Stempel 2 vorteilhafterweise der bereits genannte Kühlkörper 13 vorgesehen, der gemäß Fig.2 im wesentlichen aus dem doppelwandigen Rohr 26, mit dem Innenrohr 131, besteht, welches von Wasser durchströmt wird. Zu diesem Zweck sind ein Wasserzulauf 27 und -ablauf 28 an den Kühlkörper-Doppelmantel angeschlossen, wobei der Ringraum zwischen den Rohren des Kühlkörpers 13 in an sich üblicher Weise durch zwei in Fig.2 nicht ersichtliche radiale Trennwände bis auf einen Durchgang am dem Wasserzulauf 27 bzw. -ablauf 28 gegenüberliegenden Ende unterteilt sein kann, um so einen Wasser-Kurzschluß zwischen den Anschlußleitungen 27, 28 zu verhindern. Die Anschlußleitungen 27, 28 können im übrigen über elastische Schläuche (nicht gezeigt) mit einer externen Kühlwasserquelle bzw. einem -ablauf verbunden sein.

Bei der Ausführungsform gemäß Fig.5 bis 7 ist zwischen der Leuchtdiode 9 und der Glasscheibe 6 mit den Polarisationsfolien 7, 8 innerhalb des Fortsatzes 121 wie erwähnt das Strahlungsablenkelement 216 angeordnet, das in Form eines kegelstumpfförmigen Glaskörpers 217 ausgebildet ist, der eine kegelförmige Vertiefung 218 mit kreisförmigem Querschnitt aufweist, s. Fig.5. Die kegelförmige Grenzfläche 219 der Vertiefung 218 bildet die Strahlungs-Eintrittsseite, während die plane Grenzfläche 220 an der Unterseite des Glaskörpers 217 die Strahlungs-Austrittsseite bildet. Das in der Mitte der Polarisationsfilteranordnung 7, 8 angeordnete Strahlungsablenkelement 216 verhindert somit (ähnlich wie bei der zuvor beschriebenen Ausführungsform die Blende 16), daß der zentrale Bereich der Ascheprobe 17, der bei der hin- und hergehenden Drehbewegung des Stempels 2 nicht zerrieben wird, beleuchtet wird und einen Beitrag zum zu messenden Reflexionssignal liefert. Bei dieser Ausführungsform wird im Betrieb die Ascheprobe 17 mit von der Lichtquelle 9 stammendem, nach Durchtritt durch den Glaskörper 217 und das Polarisationsfilter 7 zu einem im Querschnitt ringförmigen Bündel "aufgeweiteten" und linear polarisierten Licht bestrahlt. Wie dabei aus Fig.5 mehr im einzelnen ersichtlich ist, wird das von der Strahlungsquelle 9 emittierte Strahlungsbündel durch Brechung an der Grenzfläche 219 der Strahlungs-Eintrittsseite sowie an der Grenzfläche 220 der Strahlungs-Austrittsseite des Glaskörpers 217 zu einem ringförmigen Strahlungsbündel 224 umgeformt, welches im Zentrum durch einen kreisrunden, dunklen Fleck 16 (Fig.6) begrenzt ist, und dessen äußerer Rand an der Unterseite der Glasscheibe 6 in Fig.6 mit strichpunktierter Linie dargestellt ist. Das divergierende ringförmige Strahlungsbündel 224 durchquert die beiden Glasplatten 6 und 5 und trifft auf die Ascheprobe 17 auf. Auf diese Weise wird der zentrale Bereich der Ascheprobe 17, in welchem kein oder nur ein geringfügiges Zerreiben der Asche beim Drehen des Stempels 2 erfolgt, von der Reflexionsmessung nicht erfaßt, da er unbeleuchtet bleibt.

Auch hier bewirkt die spiegelnde Reflexion an der Ascheprobe 17 keine Änderung der Polarisationsrichtung, so daß diese spiegelnde Reflexion nicht in die Messung eingeht, da das spiegelnd reflektierte Licht vom äußeren Polarisationsfilter 8 abgeblockt wird. Der diffuse Reflexionsanteil tritt hingegen durch den Polarisationsfilterbereich 8 durch.

In der Praxis hat sich bei Versuchen gezeigt, daß dann, wenn das von der Lichtquelle 9 emittierte Strahlungsbündel relativ stark divergierend ist, also eine Keulencharakteristik hat, Randstrahlen des Strahlungsbündels nach entsprechender Brechung an der eintrittsseitigen Grenzfläche 219 zur äußeren, konischen Mantelfläche 225 (Fig.5) gelangen und dort eine Totalreflexion erfahren können, so daß ein Lichtanteil doch zum zentralen Bereich der Ascheprobe 17 gelangen kann. Um hier Abhilfe zu schaffen und eine solche Totalreflexion an der äußeren Mantelfläche 225 zu verhindern, kann diese Mantelfläche 225 schwarz gefärbt werden; eine andere, mehr bevorzugte Möglichkeit besteht darin, die Innenfläche des als Halter vorgesehenen Drehteils 12 bzw. genauer des Halter-Fortsatzes 121 (s. auch Fig.2) zumindest im fraglichen unteren, konischen Bereich schwarz zu eloxieren, und den Glaskörper 216 mit Hilfe eines optischen Klebers - dessen Brechungsindex jenem des Glaskörpers 216 möglichst gleich sein sollte - in den Alu-Drehteil 12 einzukleben, so daß die Bildung eines Luftspaltes zwischen der Mantelfläche 225 des Glaskörpers 216 und der schwarz eloxierten Innenfläche des Fortsatzes 121 sicher vermieden wird, was eine notwendige Voraussetzung für die Vermeidung von Totalreflexion ist.

Bei der in Fig.7 dargestellten Ausführungsform des Glaskörpers 217' ist die eintrittsseitige Vertiefungs-Grenzfläche 219' konkav gewölbt, während die austrittsseitige Grenzfläche 220' konvex gewölbt ist. Wahlweise kann die austrittsseitige Grenzfläche 220' auch plan sein, oder die eintrittsseitige Grenzfläche 219' kann kegelförmig gewölbt sein. In allen Fällen kann dadurch die Richtung und Größe des ringförmigen Strahlungsbündels 224 in gewünschtem Maße beeinflußt werden.

Der Glaskörper 217 bzw. 217' kann aus anorganischem oder organischem Glas, vorzugsweise aus Acrylglas, bestehen. Die Herstellung der Vertiefung 218 bzw. 218 bei einem Glaskörper 217 bzw. 217' aus Acrylglas kann in der Weise erfolgen, daß eine auf 120°C bis 130°C erhitzte kegelförmige, gegebenenfalls teilweise sphärisch gekrümmte Stahlspitze in den Glaskörper 217, 217' eingedrückt wird, wobei diese Spitze zuvor mit Silikonöl benetzt wird. Wenn die Vertiefung 218 bzw. 218' tief genug ist, wird die Spitze abgekühlt und nach dem Erkalten vorsichtig aus der so entstandenen Vertiefung herausgezogen. Die Oberflächenqualität der Spitze bestimmt die Oberflächenqualität der Vertiefung 218 bzw. 218'.

Als Strahlungsablenkelement 216 kann anstelle eines Glaskörpers (der auch plattenförmig bzw. prismatisch sein kann) mit einer Vertiefung beispielsweise auch eine Anordnung mit konzentrisch angeordneten Spiegelflächen vorgesehen werden, die einerseits auf der Außenseite eines zentrisch angeordneten Kegels oder Kegelstumpfes und andererseits auf der Innenseite eines dazu konzentrisch angeordneten Hohlkegelstumpfes angebracht sind.

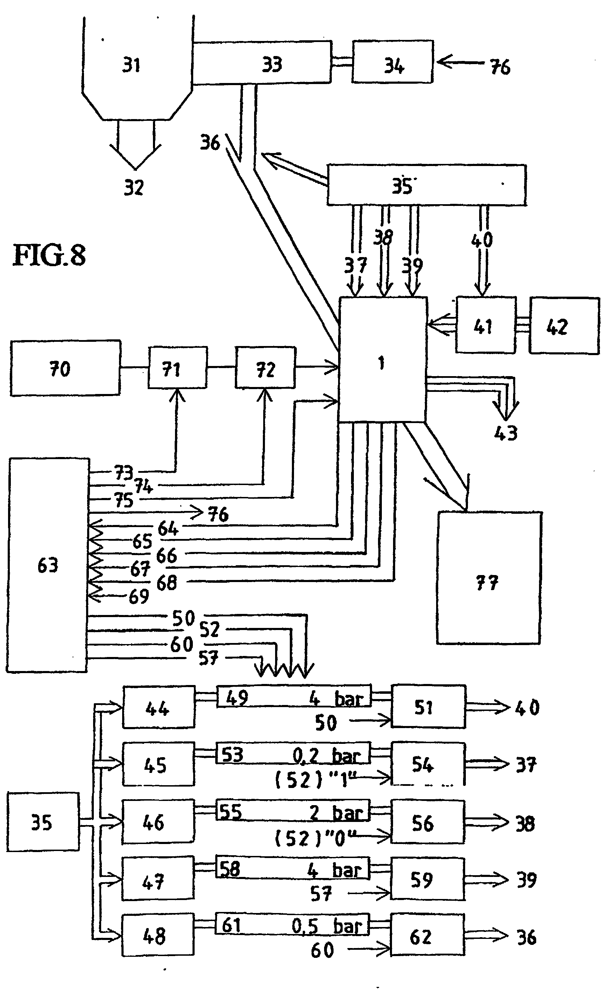

Aus Fig.8 ist ein Schema eines gesamten Meßsystems mit einer Sensorvorrichtung 1 in einer Art Blockschaltbild ersichtlich, wobei elektrische Signale bzw. Leitungen mit einfachen Linien, pneumatische Signale bzw. Leitungen mit doppelten Linien und Kühlwasserleitungen mit dreifachen Linien veranschaulicht sind.

Bei 31 ist in Fig.8 die aus dem üblichen Elektrofilter kommende Asche veranschaulicht, die dann bei 32 zu einem Sammelbehälter gefördert wird, wobei eine Förderschnecke 33 vorgesehen ist, die von einem Elektromotor 34 angetrieben wird. Bei 35 ist eine Druckluftquelle veranschaulicht, die mehrere Funktionen ausübt. So wird zum einen das Einblasen von Asche in die Sensorvorrichtung 1 mit Hilfe von Druckluft bewerkstelligt, wie dies schematisch bei 36 angedeutet ist. Weiters wird die Druckluft der Druckluftquelle 35 zum Senken (bei 37) und zum Heben (bei 38) des Stempels 2 (Fig. 1) sowie zum Ausblasen der Asche (bei 39 angedeutet) aus dem Probenteller 21 verwendet. Überdies wird mit Druckluft über eine Leitung 40 ein pneumatischer Wasserschalter 41 betätigt, um den Kühlkörper 26 (Fig.2) an einen Wasseranschluß 42 anzuschließen. Ein Wasserabfluß ist in Fig.8 weiters bei 43 schematisch veranschaulicht.

Im unteren Teil des Schemas von Fig.8 ist der Druckluftkreis etwas detaillierter veranschaulicht, wobei eine 6 bar-Druckluftquelle 35 über verschiedene Absperrventile 44 bis 48 und entsprechende Druckminderventile sowie Magnetventile zu den einzelnen Druckluftleitungen 36 bis 40 wie vorstehend erwähnt führt.

Im einzelnen ist für die Druckluftzuleitung 40 zum Einschalten der Kühlwasserzuführung ein 4 bar-Druckminderventil 49 vorgesehen, und über ein entsprechendes elektrisches Steuersignal auf einer Steuerleitung 50 wird ein zugehöriges Magnetventil 51 zur Druckluftzufuhr geöffnet.

Über eine dem Stempel 2 zugeordnete Steuerleitung 52 werden die Funktionen "Senken" (Pos. 37, Signal "1" auf der Steuerleitung 52) sowie "Heben" (Pos.

38, Signal "0" auf derselben Steuerleitung 52) gesteuert, und zwar im Falle des Senkens des Stempels 2 über ein 0,2 bar-Druckminderventil 53 und ein zugehöriges Magnetventil 54 bzw. im Falle der Funktion "Heben" über ein 2 bar-Druckminderventil 55 und ein Magnetventil 56. Über eine elektrische Steuerleitung 57 wird sodann das Ausblasen von Asche (Druckluftleitung 39) veranlaßt, wobei Druckluft über ein Druckminderventil 58, das auf 4 bar eingestellt ist, sowie ein Magnetventil 59 zugeführt wird. Schließlich wird das Einblasen von Asche (Druckluftleitung 36) über ein Steuersignal auf einer Steuerleitung 60 bewirkt, so daß ein an einem 0,5 bar-Druckreduzierventil 61 angeschlossenes Magnetventil 62 geöffnet wird.

Die Steuersignale auf den Steuerleitungen 50, 52, 57 und 60 rühren dabei von einer Rechner- und Steuereinheit 63 her, die auch zur Steuerung der Feuerungsanlage (nicht dargestellt) vorgesehen sein kann. Diese-Steuer- und Rechnereinheit 63 erhält auf sechs Eingangsleitungen Eingangssignale betreffend die Position des Stempels 2 (Leitung 64), das gemessene Reflexionsvermögen (Leitung 65), den Eisenoxidgehalt (Leitung 66), den Dioden-Referenzstrom (Leitung 67), die Temperatur im Sensor 30 (Leitung 68) sowie ein Startsignal für die Auslösung eines Meßvorganges (Leitung 69) zugeführt.

Die Übertragung der Fotostrom-Meßwerte (Leitungen 65-und 67) erfolgt von den Fotodioden 10 (Fig.4 oder 5) über einen nicht näher dargestellten Vorverstärker und drei parallele Meßumformer in den Analogeingang der Rechner- und Steuereinheit 63. Die Temperatur-Steuereingangsleitung 68 dient zur Temperaturüberwachung, wobei hierfür einer oder mehrere der temperaturempfindlicher Widerstände, beispielsweise mit positiven Temperaturkoeffizienten, die zwischen den Fotodioden 10 im Stempel 2 angeordnet sind, herangezogen werden kann. Der Widerstandswert, der von der Temperatur abhängt, wird dann ebenfalls über einen nicht näher veranschaulichten Meßumformer in die Einheit 63 eingelesen.

Für den Drehantrieb des Stempels 2 ist eine Stromquelle 70, beispielsweise eine Gleichstromquelle 2 A, 42 V, vorgesehen, der zwei Schützschalter 71, 72 für den Magnetstrom zur Drehbewegung nachgeschaltet sind. Dabei dient der Schützschalter 71 zum Durchschalten des Stroms für die Aktivierung des Drehantriebs (Steuersignal auf Steuerleitung 73). Beim Einschalten des Stroms dreht der Elektromagnet des Drehantriebs den Stempel 2 gegen eine vorgespannte Feder (nicht dargestellt). Nach Abschalten des Stroms im Takt des Rechtecksignals auf der Steuerleitung 73 dreht diese Feder den Stempel 2 in seine Ruhelage zurück. Über den Schützschalter 72 wird bei einem entsprechenden Steuersignal auf einer Steuerleitung 74 das Umpolen des Magnetisierungsstroms bewerkstelligt, damit der Eisenkern des Drehmagneten nicht nur in eine Richtung aufmagnetisiert wird. Ein solches Umpolen erfolgt z.B. immer nach 150 Drehungen.

Über eine Ausgangsleitung 75 wird schließlich die Stromzuführung zur Leuchtdiode 9 bewirkt, und über ein Steuersignal 76 ("Fördern") wird der Elektromotor 34 für den Betrieb der Förderschnecke 33 eingeschaltet.

Schließlich ist in Fig.8 bei 77 ein Probensammelbehälter gezeigt, in den die einzelnen Ascheproben 17 nach Durchführung der Messungen ausgeblasen werden.

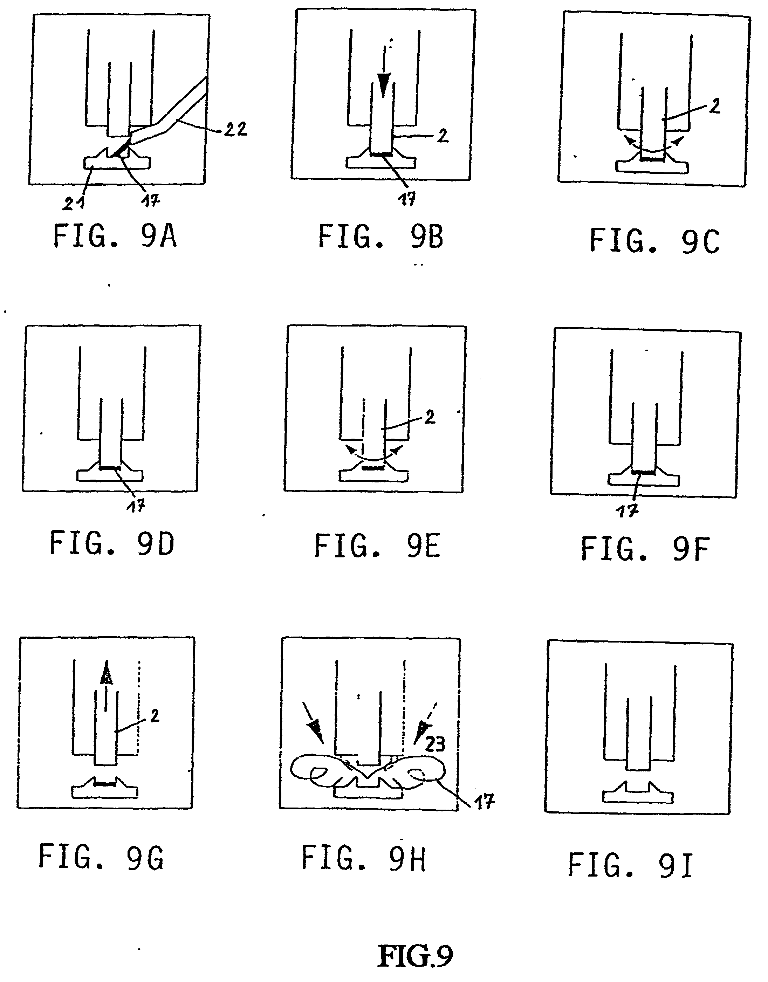

Die verschiedenen Signalabgaben bzw. Meßwertnahmen etc. können automatisch, insbesondere mit Hilfe eines in der Einheit 63 gespeicherten Ablaufprogramms, erfolgen, wobei beispielsweise viermal oder fünfmal pro Stunde ein Meßzyklus veranlaßt wird, wie er nachfolgend anhand der schematischen Darstellungen von Fig.9 erläutert werden soll. Ein derartiger Meßzyklus kann dabei beispielsweise 5 bis 8 min dauern.

Gemäß Fig.9A wird der Probenteller 21 über die Leitung 22 mit Asche 17 gefüllt (Signal "Einblasen" auf der Steuerleitung 60, Druckluftleitung 36). Danach wird die Ascheprobe 17 gemäß Fig.9B mit Hilfe des Stempels 2 gepreßt (Signal "1", d.h. "Senken", auf der Zylinder-Steuerleitung 52, Druckluftleitung 37).

Sodann wird der Drehantrieb 25 eingeschaltet (Steuersignale auf den Ausgangsleitungen 73 und 74 der Steuer- und Rechnereinheit 63), wobei beispielweise 200mal hin- und hergedreht wird. Dies ist schematisch in Fig.9C gezeigt, und bei diesem Verdrehen des Stempels 2 wird die Ascheprobe 17 teilweise zerrieben. Durch diese wiederholte Drehbewegung um wenige Grade hin und zurück wird durch Zermahlen der Kohlekörner der dunkle Anteil der Oberfläche der Ascheprobe 17 vergrößert, die Absorption steigt, und das Reflexionsvermögen der Asche sinkt.

Nach diesen 200 Drehbewegungen wird gemäß Fig.9D eine erste Meßwertaufnahme durchgeführt, und danach wird wie in Fig.9E gezeigt nochmals der Stempel 2 einer hin- und hergehenden Drehbewegung unterworfen, beispielweise 100 weiteren Drehbewegungen, ebenfalls wieder jeweils um einige wenige Grade. Sodann erfolgt eine zweite Meßwertaufnahme gemäß Fig.9F, und dieser zweite Meßwert betreffend Reflexionsvermögen sowie die Reflexionsvermögen-Differenz zwischen den beiden Meßwerten (1. Meßwert - 2. Meßwert) fließen in den im Rechner 63 gespeicherten Algorithmus zur Berechnung des Kohlenstoffgehaltes ein.

Gemäß Fig.9G wird der Stempel 2 hochgefahren (Signal "0", d.h. "Heben", auf der Steuerleitung 52, Druckluftleitung 38), danach wird die gemessene Ascheprobe 17 gemäß Fig.9H ausgeblasen (Steuerleitung 57, Druckluftleitung 39), und der Meßzyklus wird beendet (Fig.9I).

Sofern der gemessene Kohleanteil geringer als 5% ist, kann die Flugasche wie erwähnt bei der Zementherstellung weiter verwendet werden. An sich besteht Flugasche im wesentlichen aus Quarz ($SiO_2$; 30

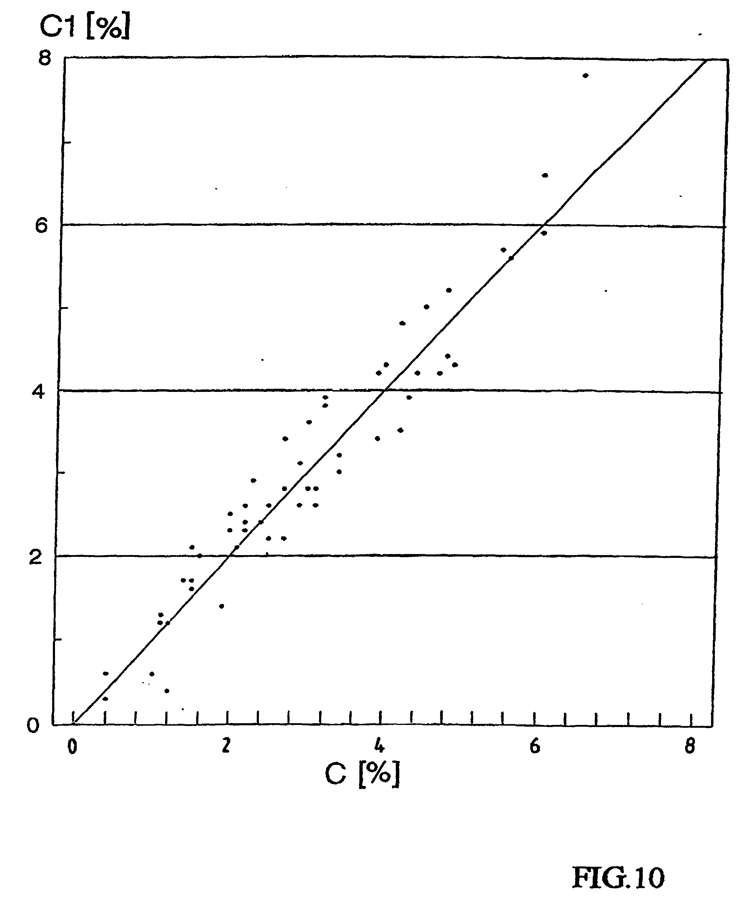

bis 35%), Korund ($Al_2O_3$; 20 bis 40%), Eisenoxiden ($Fe_2O_3$ und $Fe_3O_4$; 0 bis 12%) sowie Kohlenstoff (C; 0 bis 7%) und geringeren Mengen weiterer Metalloxide. Kohlenstoff und Eisenoxide sind dabei dunkel, während die restlichen Anteile hell erscheinen. Untersuchungen haben gezeigt, daß auf die beschriebene Weise verläßlich der Kohlenstoffgehalt von Flugasche, die bei der Rauchgasreinigung von kalorischen Kraftwerken anfällt, bestimmt werden kann. Vor allem hat sich ergeben, daß die ermittelten Reflexionswerte bzw. Reflexions-Differenzwerte in Verbindung mit einer Induktivitätsmessung (wie nachstehend noch näher erläutert werden wird) geeignete Ausgangsgrößen zur Ermittlung des Kohlenstoffgehaltes bilden, wobei basierend auf diesen drei Größen (2. Reflexionsvermögen-Meßwert, Differenzwert und Induktivitätsänderung einer mit Flugasche gefüllten Luftspule) für 60 Ascheproben bei einem empirisch herausgefundenen Algorithmus die in Fig.10 dargestellte Korrelation zwischen so ermittelten Kohlenstoff-Meßwerten C1 und entsprechenden Laboranalysewerten C erzielt werden konnte. Wie ersichtlich ist dabei die Streuung relativ gering, so daß die beschriebene Kohlegehaltbestimmung als sehr verläßlich und genau angesehen werden kann.

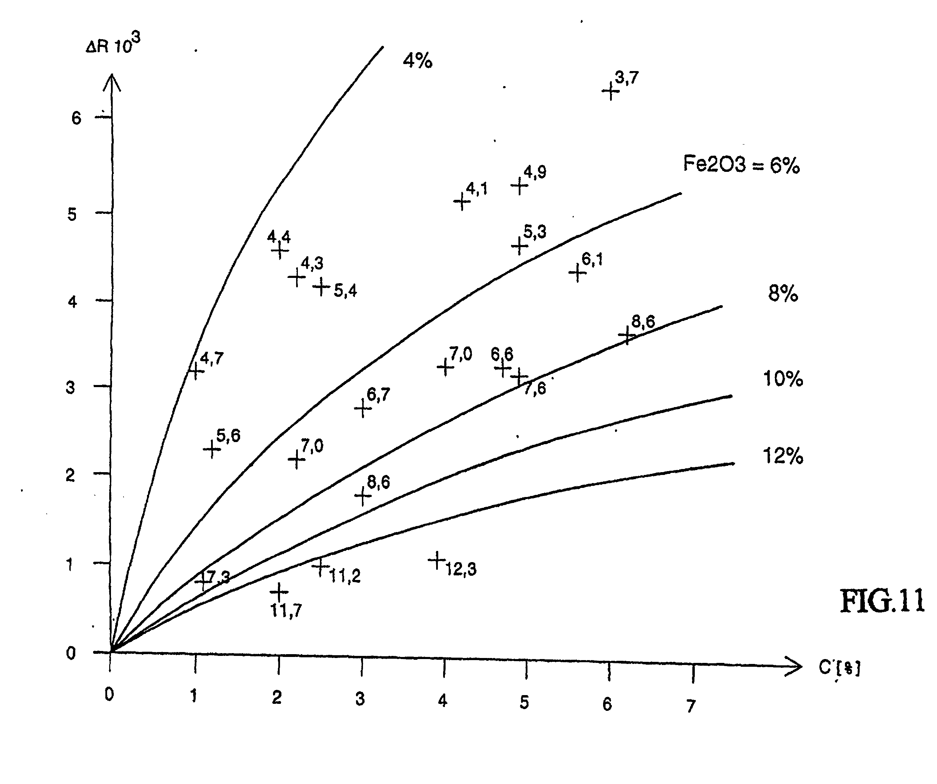

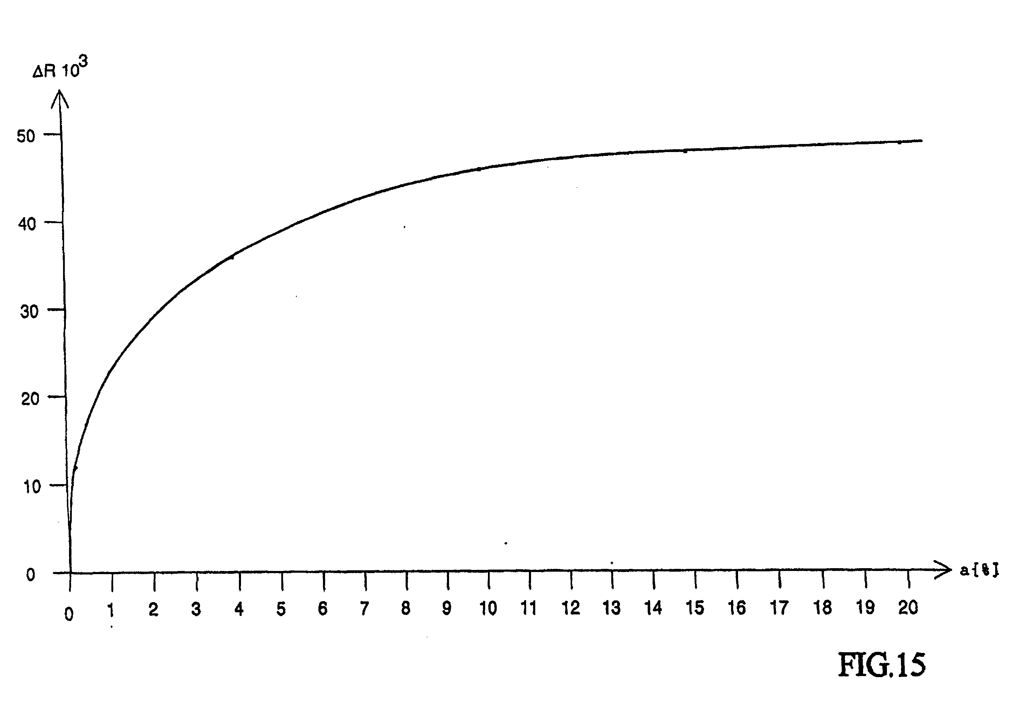

Mit zunehmendem Kohlenstoffgehalt in der Asche nimmt der vorstehend erläuterte Reflexions-Differenzwert nicht linear zu, sondern schwächer, ähnlich einer Wurzelfunktion, wie aus Fig.11 und 15 erkennbar ist. Überdies wird mit dieser Differenzmessung zwar Unabhängigkeit von zahlreichen Hintergrundeinflüssen erzielt, jedoch geht weiterhin als Parameter der Eisenoxidgehalt ein. Der Differenzwert $\Delta R$ gemäß Fig.15 fächert daher in eine Kurvenschar mit dem Eisenoxidgehalt als Parameter auf, und in Fig.11 ist für verschiedene Eisenoxidanteile (4%, 6%, 8%, 10% und 12%) die Abhängigkeit des Differenzwertes $\Delta R$ vom tatsächlichen Kohlenstoffgehalt C (in %) veranschaulicht (mit den Symbolen + sind gemessene Werte dargestellt, die Kennlinien sind gerechnet). Die Erklärung liegt hier darin, daß bei einem hohen Eisenoxidgehalt von vornherein viele schwarze Partikel vorhanden sind und der Effekt der Oberflächenvergrößerung durch das Zereiben der Kohlekörner in der Asche schwächer zum Tragen kommt (und die Kurve daher flacher ist) als in jenem Fall, in dem wenig Eisenoxid in der Asche enthalten ist und daher die relative Oberflächenzunahme aufgrund des Zerreibens der Kohlepartikel größer (und damit die Kurve steiler) ist.

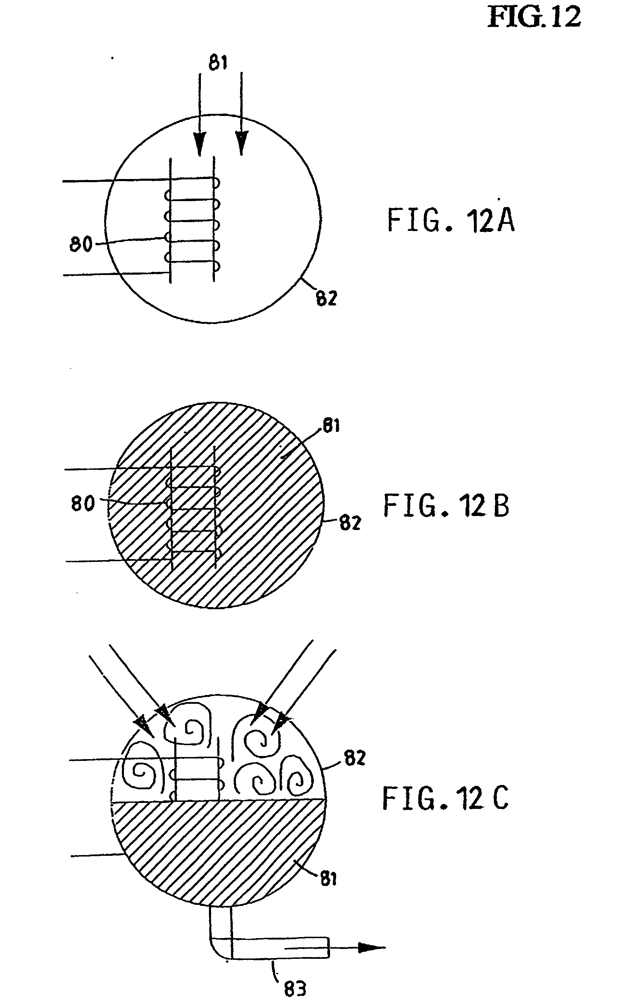

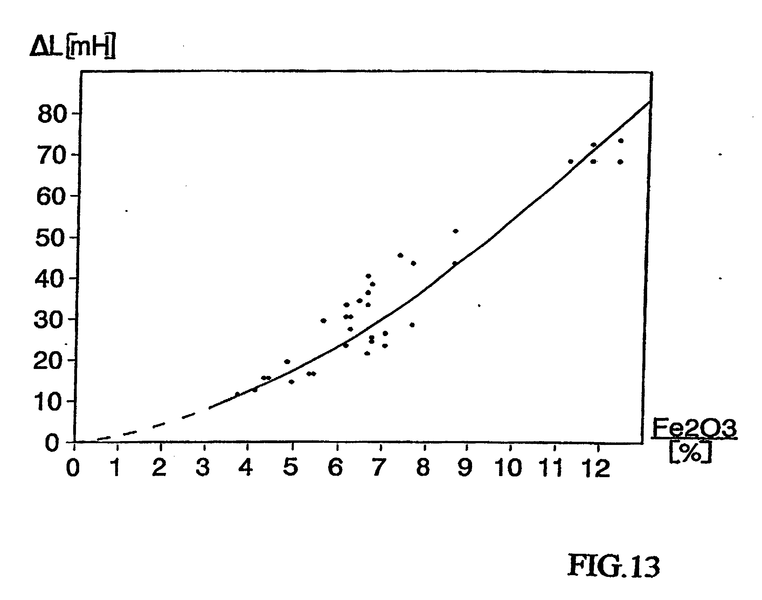

Eine Methode zur schnellen, näherungsweisen Bestimmung des Eisenoxidgehaltes besteht nun darin, daß eine Luftspule 80 (Fig.12) mit der Flugasche befüllt wird (s. Pfeil 81 in Fig.12A), wobei sich die Luftspule 80 beispielsweise in einem eigenen Aschebehälter 82 befindet. Gemäß Fig.12B wird sodann die durch das Befüllen des Behälters 82 mit der Asche 81 sich ergebende Induktivitätsänderung als Maß für den Anteil an Eisenoxid (FeO, $Fe_3O_4$, $Fe_2O_3$) erfaßt. Aus Fig.13 ist dabei das Ergebnis derartiger Messungen der Änderung der Induktivität ($\Delta L$) der Luftspule 80 beim Befüllen des Behälters 82 mit Flugasche 81 zu ersehen. Der Einfachheit halber ist in Fig.13 dabei der $Fe_2O_3$-Prozentanteil auf der einen Koordinate aufgetragen, wobei die Angabe in $Fe_2O_3$ durch Multiplikation des Fe-Gehaltes mit dem Massefaktor 1,43 entstand und angibt, wieviel Masseprozent $Fe_2O_3$ in der Asche enthalten wäre, wenn das gesamte Eisenoxid nur in dieser Form - $Fe_2O_3$ - vorlage. Auf der anderen Achse ist die Induktivitätsänderung $\Delta L$ in mH für die beispielsweise verwendete Luftspule 80 aufgetragen.

Ganz allgemein kann für die Bestimmung des Eisenoxidgehalts die Änderung des magnetischen Feldes (der Feldlinienverteilung) bzw. der Induktion einer Spule (Luftspule oder mit Eisenkern, z.B. Ringkernspule) durch die Permeabilität des magnetischen Ascheanteils zugrundegelegt werden.

Gemäß Fig.12C wird anschließend an die Messung der Induktivitätsänderung die Asche 81 wieder aus dem Behälter 82 ausgeblasen und über eine Leitung 83 einem Zwischensilo (in Fig.12 nicht gezeigt; z.B. 77 gemäß Fig.8) zugeführt.

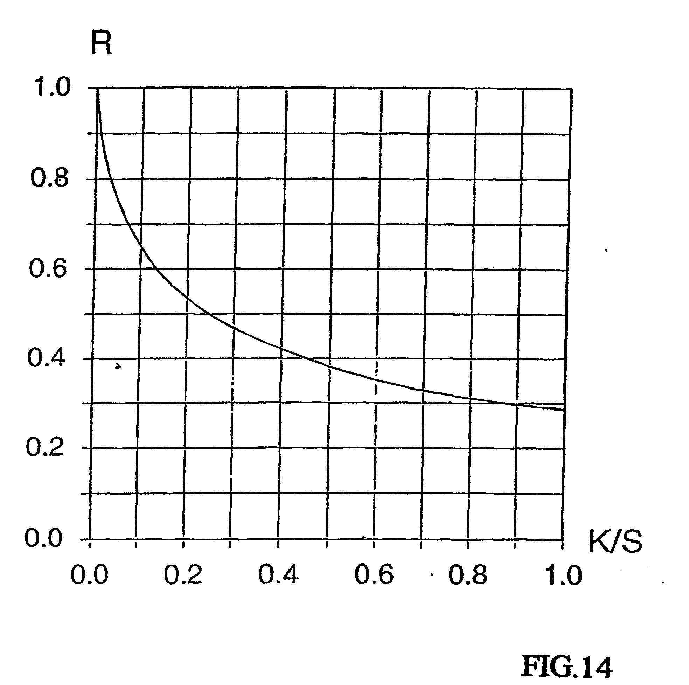

Bevor nun auf den bevorzugt angewendeten Algorithmus zur Berechnung des Kohlegehalts aufgrund der drei vorstehend erläuterten Informationen Reflexions-Differenzwert $\Delta R$, Reflexionsvermögen-Meßwert R bei der zweiten Meßwertnahme und Induktivitätsanderung $\Delta L$ eingegangen wird, sei noch auf Fig. 14 verwiesen, in der das diffuse Reflexionsvermögen R einer theoretisch unendlich dicken Schicht in Abhängigkeit vom Verhältnis aus Absorption K und Rückstreuung S der Schicht veranschaulicht ist. Der Zusammenhang zwischen R und K/S ist dabei durch die sogenannte "Kubelka-Munk"-Funktion gegeben:

$$K/S = (1 - R)^2/2R$$

Dabei ist R das diffuse Reflexionsvermögen einer unendlich dicken Schicht, wobei diese Annahme auch bei den vorliegenden Ascheprobe-Messungen zulässig ist.

Nach dem. Reflexionsvermögen R aufgelöst kann diese Funktion wie folgt angeschrieben werden:

$$R = 1 + K/S - \sqrt{(K/S)^2 + 2\,(K/S)}$$

Das diffuse Reflexionsvermögen der Ascheprobe kann wie erwähnt gemessen werden, und es ist eine Funktion nur vom Verhältnis vom Absorptionskoeffizient K zu Streukoeffizient S, hängt jedoch nicht von deren Absolutwerten ab.

Zum gleichen Ergebnis gelangt man, wenn die Ascheprobe als aus zweierlei Arten von Würfeln aufgebaut gedacht wird, nämlich einerseits aus gläsernen Würfeln, die annahmeweise das einfallende Licht zu gleichen Teilen in allen sechs Raumrichtungen streuen, und andererseits aus schwarzen Würfeln mit der Eigenschaft, daß jeder einfallende Lichtstrahl absorbiert wird.

Wird nun der Fall einer Grenzfläche mit unendlich vielen Würfelschichten darunter betrachtet, so besitzt jede Schicht die Eigenschaft, daß sie einen Teil K der einfallenden Intensität absorbiert und den Rest S zu gleichen Teilen nach oben und unten streut. Mit $x = S/(K + S)$ kann in einer Modellrechnung gezeigt werden, daß für das Reflexionsvermögen gilt:

$$R = (1 - \sqrt{1 - x^2})/x$$

Durch Einsetzen von $x = S/(K + S)$ kann gezeigt werden, daß diese Beziehung der vorstehend bereits angegebenen Kubelka-Munk-Funktion entspricht.

Im Zusammenhang mit dem Effekt des Zerreibens von Kohlekörnern kann bei diesem Würfelmodell beispielsweise angenommen werden, daß bei gleichbleibendem Volumenanteil a der schwarzen Würfel insgesamt je acht schwarze Würfel zu einem großen schwarzen Würfel mit der doppelten Kantenlänge verklumpt waren. Dies stellt die Ausgangssituation vor dem Zerreiben der Asche dar. Während des Zerkleinerns teilen sich die Kohlekörner (wobei dann anstatt der großen schwarzen Würfel mit der doppelten Kantenlänge z.B. jeweils acht kleine schwarze Würfel erhalten werden), und die zerriebenen Kohlekörner bieten dem Licht eine größere absorbierende Oberfläche an, wodurch das Reflexionsvermögen der Ascheprobe sinkt. Wie erwähnt wird im vorliegenden Modell diese Teilung durch drei Schnitte parallel zu den Raumebenen dargestellt, wodurch jeweils ein großer schwarzer Würfel in acht kleine Würfel aufgespalten wird.

Es kann nun das Reflexionsvermögen einmal unter Zugrundelegung der großen Würfel (Zustand bei der ersten Reflexionsmessung) und das andere Mal unter Annahme der kleinen schwarzen Würfel (Zustand bei der zweiten Reflexionsmessung) berechnet werden, wobei der Gesamt-Volumenanteil a an schwarzen Würfeln bei ein und derselben Probe selbstverständlich gleich bleibt. Betrachtet man eine Reihe von Proben mit unterschiedlichem Schwarzanteil a, so kann in einer Modellrechnung gezeigt werden, daß die Differenz im Reflexionsvermögen abhängig vom Schwarzanteil a nicht-linear zunimmt.

Bezeichnet $R_a$ das Reflexionsvermögen mit kleinen Würfeln (Zustand nach dem Mahlvorgang, bei der zweiten Reflexionsmessung), $R_b$ das Reflexionsvermögen mit großen Würfeln (Zustand bei der ersten Reflexionsmessung), so kann die Differenz $\Delta R = R_b - R_a$ nach folgenden Formeln berechnet werden:

$$R_a = (1 - \sqrt{1 - x_a^2})/x_a$$

mit

$$x_a = [(1 - a)/2]/[(a + (1 - a)/2]$$

$$R_b = (1 - \sqrt{1 - x_b^2})/x_b$$

mit

$$x_b = [(2/3)(1 - a)]/[a + (2/3)(1 - a)]$$

Fig.15 zeigt den Differenzwert $\Delta R$ als Funktion des Anteils a an schwarzen Würfeln (kann als prozentueller Kohleanteil aufgefaßt werden) und veranschaulicht somit, daß bei zunehmendem Anteil a (entspricht Kohleanteil) der Reflexions-Differenzwert größer wird (in Fig. 15 dargestellt für den Spezialfall, daß beim Mahlzyklus alle schwarzen Würfel in acht Teile zerlegt werden). Diese Zunahme von $\Delta R$ gilt aber nur bei kleinen Werten von a (bis etwa 20%); bei größeren Werten von a nimmt $\Delta R$ wieder ab.

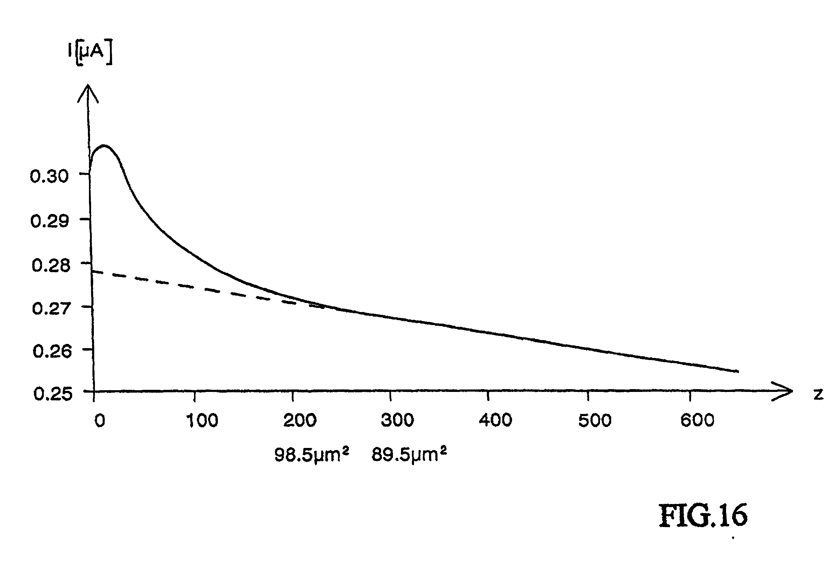

In Fig.16 ist eine Strom-Meßkurve (Fotodiodenstrom I in Abhängigkeit von der Zahl 0 der Drehungen des Stempels 2) zur Veranschaulichung des Reflexionsvermögens einer bestimmten Probe (mit einem C-Gehalt von 7,4%) bei verschiedenen Mahlgraden beispielshalber gezeigt. Es ist dabei ersichtlich, daß das Reflexionsvermögen (Fotostrom I in µA) am Beginn des Zerreibens kurz und steil ansteigt und nach Erreichen eines Maximums zu sinken beginnt, wobei erst bei einem bestimmten Mahlgrad, bei Anwendung der vorliegenden Sondenvorrichtung z.B. bei 200 Drehungen (erste Messung), ein annähernd linearer Zusammenhang zwischen Reflexionsvermögen und Mahlgrad (ausgedrückt durch die Zahl z der Drehungen) erhalten wird. Weitere Untersuchungen an dieser Probe ergaben, daß die mittlere Kohlekorngröße (in Draufsicht) nach 200 Drehbewegungen ungefähr 98,5 $\mu m^2$ betrug, nach insgesamt 300 Drehbewegungen jedoch nur mehr 89,5 $\mu m^2$. Durch diese Verkleinerung in der Kohlekorngröße beim Zerreiben vergrößerte sich auf die beschriebene Weise die Absorption der Ascheprobe, so daß die diffuse Reflexion in entsprechendem Ausmaß abfiel.

Ähnliches konnte bei anderen Proben festgestellt werden: Bei einer Probe mit einem C-Anteil von 0,7% ergab sich eine Abnahme der mittleren Kohlekorngröße von 100,2 $\mu m^2$ nach 200 Drehungen auf eine Kohlekorngröße von 90 $\mu m^2$ nach 300 Drehungen; bei einer Probe mit 2,9% C-Anteil nahm hier die mittlere Kohlekorngröße von 118,5 $\mu m^2$ auf 93,8 $\mu m^2$ ab.

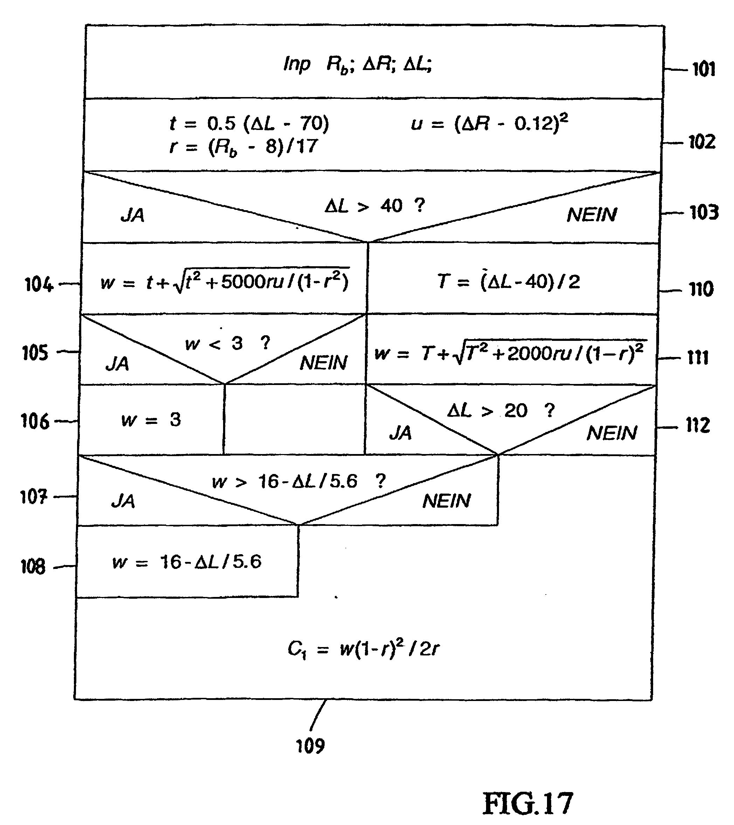

In Fig.17 ist schließlich in einem Flußdiagramm schematisch die Vorgangsweise bei der Ermittlung des tatsächlichen Kohlenstoffgehaltes mit Hilfe eines anhand der vorstehenden theoretischen Überlegungen ermittelten, jedoch aufgrund empirischer Gegebenheiten vereinfachten Algorithmus veranschaulicht. Dabei erfolgt die Meßwertaufnahme in einem Block 101, wobei der zweite Reflexionsvermögen-Meßwert $R_b$, der

Differenzwert $\Delta R$ und der Zahlenwert der in mH gemessenen Induktivitätsänderung $\Delta L$ (als dimensionslose Größe) angeführt sind. In einem nachfolgenden Schritt 102 werden folgende Rechengrößen ermittelt (alle Variablen sind dimensionslos):

$$t = 0{,}5 \, (\Delta L - 70)$$

$$r = (R_b - 8)/17$$

$$u = (\Delta R - 0{,}12)^2 .$$

In Block 103 wird sodann abgefragt, ob $\Delta L$ größer 40 ist, und wenn ja, wird in einem Schritt 104 ein Faktor w gemäß

$$w = t + \sqrt{t^2 + 5000 \, ru/(1 - r)^2}$$

errechnet. Falls dieser Korrekturfaktor w bei der Abfrage in Schritt 105 < 3 gefunden wird, wird er in Schritt 106 gleich 3 gesetzt, und es wird dann zu Schritt 107 weitergegangen, ebenso wie in dem Fall, daß bei der Abfrage 105 der Wert für $w \geq 3$ ist. Im Schritt 107 wird dann abgefragt, ob der Korrekturfaktor $w > 16 - \Delta L/5{,}6$ ist, und wenn ja, wird $w = 16 - \Delta L/5{,}6$ gesetzt, und es wird anschließend zum Schritt 109 der Berechnung des Kohlegehalts C1 gegangen (ebenso wie im Fall, daß die Entscheidung im Schritt 107 negativ ist.

Wenn andererseits im Schritt 103 gefunden wird, daß $\Delta L \leq 40$ ist, so wird ein modifizierter Induktivitätszahlenwert $T = (\Delta L - 40)/2$ ermittelt, Schritt 110, und nachfolgend wird im Schritt 111 der Faktor w mit

$$w = T + \sqrt{T^2 + 2000 \, ru/(1 - r)^2}$$

berechnet. Danach wird bei 112 abgefragt, ob $\Delta L$ größer 20 ist, und wenn ja, wird wieder zur Abfrage gemäß Schritt 107 übergegangen und abgefragt, ob $w > 16 - \Delta L/5{,}6$ ist usw.. Wenn das Ergebnis der Abfragen in Schritt 112 negativ ist, wird sofort zu Schritt 109 übergegangen.

Im Schritt 109 wird schließlich der Kohlegehalt C1 gemäß der Beziehung

$$Cl = w \, (1 - r)^2/2r$$

berechnet.

Wenn die Erfindung vorstehend anhand von besonders bevorzugten Ausführungsbeispielen erläutert wurde, so sind doch selbstverständlich weitere Abwandlungen und Modifikationen möglich; so ist ist es insbesondere denkbar, anstatt der Anordnung von Leuchtdiode 9 und Fotodioden 10 (s. Fig.4) innerhalb des Meßzylinders, d.h. Stempels 2, eine Anordnung mit Lichtleitern vorzusehen, wobei überdies auch in diesem Fall, bei entsprechenden Aus- und Einkoppeleinrichtungen für die Lichtleiter, eine kontinuierlich drehende Bewegung des Stempels 2 anstatt der hinund hergehenden Drehbewegung vorgesehen werden kann, um die jeweilige Ascheprobe einem Mahlvorgang zu unterwerfen. Auch kann anstatt sichtbarem Rotlicht im Prinzip auch eine andere Strahlung, wie etwa grünes Licht oder IR-Strahlung, verwendet werden. Ferner kann der vorstehend angeführte, aufgrund empirischer Überlegungen vereinfachte Algorithmus entsprechend den angegebenen theoretischen Überlegungen modifiziert werden, um den Kohlegehalt der jeweiligen Asche zu berechnen.

## Patentansprüche

1.  Verfahren zur Bestimmung des Kohlegehalts in Asche, insbesondere in bei der Rauchgasreinigung von kalorischen Kraftwerken anfallender Flugasche, bei welchem Verfahren jeweils eine Ascheprobe (17) mit elektromagnetischer Strahlung, insbesondere Licht, bestrahlt, die von der Ascheprobe (17) reflektierte Strahlung gemessen und das so erfasste Reflexionsvermögen der Asche als Maß für den Kohlegehalt ausgewertet wird, **dadurch gekennzeichnet, dass** die jeweilige Ascheprobe (17) einem Kohlepartikel-zerkleinerungsvorgang unterworfen wird und zumindest zwei Reflexionsvermögen-Messungen, bei unterschiedlichen Kohlepartikelgrößen, vorgenommen werden, wobei die Ergebnisse dieser Reflexionsvermögen-Messungen der Bestimmung des Kohlegehalts zugrunde gelegt werden.

2.  Verfahren nach Anspruch 1, **dadurch gekennzeichnet, dass** die Ascheprobe (17) in einem Behälter (21) mit Hilfe eines Stempels (2) zerrieben wird.

3.  Verfahren nach Anspruch 1 oder 2, **dadurch gekennzeichnet, dass** die Ascheprobe (17) bereits vor der ersten Reflexionsvermögen-Messung teilweise zerrieben und nach dieser Messung weiter zerrieben wird, bevor die nächste Reflexionsvermögen-Messung durchgeführt wird.

4.  Verfahren nach einem der Ansprüche 1 bis 3, **dadurch gekennzeichnet, dass** bei der Bestimmung des Kohlegehalts der Differenzwert ($\Delta R$) zwischen den zumindest zwei Reflexionsvermögen-Messungen und'das Ergebnis der späteren Reflexionsvermögen-Messung zugrunde gelegt werden.

5.  Verfahren nach einem der Ansprüche 1 bis 4, **da-**

**durch gekennzeichnet, dass** die Äscheprobe (17) vor den Messungen gepresst wird.

6. Verfahren nach einem der Ansprüche 1 bis 5, **dadurch gekennzeichnet, dass** korrektiv zur Reflexionsmessung eine Bestimmung des Eisenoxidgehalts, beispielsweise mittels einer Induktivitätsmessung, vorgenommen wird.

7. Verfahren nach Anspruch 6, **dadurch gekennzeichnet, dass** eine Luftspule (80) mit Asche befüllt und die dadurch bewirkte Induktivitätsänderung ($\Delta L$) als Maß für den Eisenoxidanteil genommen wird.

8. Vorrichtung zur Bestimmung des Kohlegehalts in Asche gemäß dem Verfahren nach einem der Ansprüche 1 bis 7, mit wenigstens einer Strahlungsquelle (9) und wenigstens einem Strahlungsaufnehmer bzw. -empfänger (10) innerhalb eines Sensorkörpers, der ein strahlungsdurchlässiges Fenster (5, 6) aufweist, wobei jeweils eine Äscheprobe (17) mit von der Strahlungsquelle (9) abgegebener elektromagnetischer Strahlung, insbesondere Licht, bestrahlt, die von der Äscheprobe (17) reflektierte Strahlung mit Hilfe des Strahlungsaufnehmers bzw. -empfängers (10) gemessen und das so erfasste Reflexionsvermögen der Asche als Maß für den Kohlegehalt ausgewertet werden kann, **dadurch gekennzeichnet, dass** dem Sensorkörper ein Ascheproben-Behälter (21) gegenüberliegt und der Sensorkörper als zum Zerreiben der Äscheprobe (17) im Behälter (21), für den Kohlepartikel-Zerkleinerungsvorgang, in einem den Ascheproben-Behälter tragenden Rahmen oder Gehäuse (3) beweglich gelagerter und mit einer Antriebseinrichtung (24, 25) verbundener Stempel (2) ausgebildet ist, und somit Reflexionsvermögen-Messungen bei unterschiedlichen Kohlepartikelgrößen mit Hilfe des Strahlungsaufnehmers bzw. -empfangers (10) durchführbar sind.

9. Vorrichtung nach Anspruch 8, **dadurch gekennzeichnet, dass** der Stempel (2) mit einem im Rahmen oder Gehäuse (3) angebrachten Linearantrieb, insbesondere Druckmittelzylinder (24), gekuppelt und durch diesen zum Ascheproben-Behälter (21) und zurückbewegbar ist.

10. Vorrichtung nach Anspruch.8 oder 9, **dadurch gekennzeichnet, dass** der Stempel (2) mit einem im Rahmen oder Gehäuse (3) angebrachten Drehantrieb (25) zum Zerreiben der Asche (17) im Behälter (21) durch eine Drehbewegung gekuppelt ist.

11. vorrichtung nach einem der Ansprüche 8 bis 10, **dadurch gekennzeichnet, dass** der Stempel (2) mit einem im Rahmen oder Gehäuse (3) angebrachten hin- und hergehenden Drehantrieb (25). zum Zerreiben der Asche (17) im Behälter (21) durch hin- und hergehende Drehbewegungen gekuppelt ist.

12. Vorrichtung nach Anspruch 10 oder 11, **dadurch gekennzeichnet, dass** der Drehantrieb (25) mit einem Elektromagnet ausgeführ ist.

13. Vorrichtung nach einem der Ansprüche 8 bis 12, **dadurch gekennzeichnet, dass** der Ascheproben-Behälter (21) durch einen Probenteller gebildet ist.

14. Vorrichtung nach einem der Ansprüche 8 bis 13, **dadurch gekennzeichnet, dass** der Stempel (2) allgemein zylindrisch ausgebildet ist.

15. Vorrichtung nach einen der Ansprüche 8 bis 14, **dadurch gekennzeichnet, dass** dem Ascheproben-Behälter (21) zumindest ein Ausblaserohr (23) zum Ausblasen der gepressten, gemahlenen Asche (17) nach den Reflexionsmessungen zugeordnet ist.

16. Vorrichtung nach einem der Ansprüche 8 bis 15, **dadurch gekennzeichnet, dass** mehrere Strahlungsaufnehmer bzw. -empfänger (10) in einer kreisförmigen Anordnung um eine mittige Strahlungsquelle (9) herum angeordnet sind.

17. Vorrichtung nach Anspruch 16, **dadurch gekennzeichnet, dass** einer der Strahlungsaufnehmer bzw. -empfänger (10) direkt der Strahlungsquelle (9) zu deren Strahlungsemissions-Überwachung und zur Gewinnung eines Referenzwertes für die Reflexionsmessung zugeordnet ist.

18. Vorrichtung nach Anspruch 16 oder 17, **dadurch gekennzeichnet, dass** am Fenster (5, 6) konzentrisch zwei bezüglich ihrer Polarisationsrichtungen um 90° gedrehte Polarisationsfilter (7, 8) angebracht sind.

19. Vorrichtung nach einem der Ansprüche 8 bis 18, **dadurch gekennzeichnet, dass** der Stempel (2) mit einem Wasser-Kühlkörper (13) ausgerüstet ist.

20. Vorrichtung nach Anspruch 16, **dadurch gekennzeichnet, dass** der mittlere Bereich (16) des Fensters (5, 6) benachbart der mittigen Strahlungsquelle (9) lichtundurchlässig ist.

21. Vorrichtung nach Anspruch 20, **dadurch gekennzeichnet, dass** auf der Glasscheibe (6) des Fensters (5, 6) eine zentrale strahlungsdurchlässige Blende (16) in Form einer dünnen Metallschicht angebracht ist.

22. Vorrichtung nach einem der Ansprüche 8 bis 19, **dadurch gekennzeichnet, dass** im Strahlengang Von der Strahlungsquelle (9) zur. Ascheprobe (17) ein Strahlungsablenkelement (216) angeordnet. ist, welches ein in die Strahlungs-Eintrittsseite des Strahlungsablenkelementes (216) eintretendes Strahlungsbündel in ein im Querschnitt allgemein ringförmiges Strahlungsbündel an der Strahlungs-Austrittsseite des Strahlungsablenkelementes (216) umformt.

23. Vorrichtung nach Anspruch 22, **dadurch gekennzeichnet, dass** das Strahlungsablenkelement (216) ein Glaskörper (217; 217') ist, welcher an der Strahlungs-Eintrittsseite eine in Richtung der optischen Achse der Strahlungsquelle (9) ausgerichtete, sich zu einer punktförmigen Spitze verengende, beispielsweise allgemein kegelförmige Vertiefung (218, 218') aufweist.

24. Vorrichtung nach Anspruch 23, **dadurch gekennzeichnet, dass** die Vertiefung (218) im Querschnitt kreisförmig ist.

25. Vorrichtung nach Anspruch 23 oder 24, **dadurch gekennzeichnet, dass** die Vertiefung (218') im Glaskörper (217') eine konkav gekrümmte, insbesondere sphärisch gekrümmte Mantelfläche (219') aufweist.

26. Vorrichtung nach einem der Ansprüche 23 bis 25, **dadurch gekennzeichnet, dass** der Scheitelwinkel der Vertiefung (218; 218') im Bereich von 60° bis 120°, vorzugsweise bei allgemein 90°, liegt.

27. Vorrichtung nach einem der Ansprüche 23 bis 26, **dadurch gekennzeichnet, dass** der Glaskörper (217) auf der Strahlungs-Austrittsseite eine allgemein plane oder konvexe Grenzfläche (220; 220') aufweist.

28. Vorrichtung nach einem der Ansprüche 23 bis 27, **dadurch gekennzeichnet, dass** der Glaskörper (217) aus Acrylglas besteht.

29. Vorrichtung nach einem der Ansprüche 23 bis 28, **dadurch gekennzeichnet, dass** der Glaskörper (217, 217') mit seiner äußeren umfangsfläche (225) mit Hilfe eines optischen Klebers, dessen Brechungsindex jenem des Glaskörpers (217, 217') soweit entspricht, dass Totalreflexion wirksam unterdrückt wird, in einen zumindest an der Befestigungsfläche schwarz eloxierten Halter (12) eingeklebt ist.

## Claims

1. A method for determining the carbon content in ash and, more specifically, in fly ash occurring during the purification of smoke gases from thermal power plants, which method comprises exposing a respective ash sample (17) to electromagnetic radiation and, in particular, light, measuring the radiation reflected by the ash sample (17), and evaluating the thus detected reflectivity of the ash as a measure of the carbon content, **characterized in that** the respective ash sample (17) is subjected to a carbon-particle comminution procedure and at least two reflectivity measurements are carried out with different carbon particle sizes, the determination of the carbon content being based on the results of these reflectivity measurements.

2. A method according to claim 1, **characterized in that** the ash sample (17) is pounded in a receptacle (21) by the aid of a stamp (2).

3. A method according to claim 1 or 2, **characterized in that** the ash sample (17) is partially pounded already prior to the first reflectivity measurement and is further pounded after this measurement prior to carrying out the subsequent reflectivity measurement.

4. A method according to any one of claims 1 to 3, **characterized in that** the determination of the carbon content is based on the differential value ($\Delta$R) between the at least two reflectivity measurements, and on the result of the subsequent reflectivity measurement.

5. A method according to any one of claims 1 to 4, **characterized in that** the ash sample (17) is pressed prior to said measurements.

6. A method according to any one of claims 1 to 5, **characterized in that**, as a corrective to the reflectivity measurement, the iron oxide content is determined, for instance, by means of an inductance measurement.

7. A method according to claim 6, **characterized in that** an air coil (80) is filled with ash and the thus caused change in inductance ($\Delta$L) is taken as a measure for the iron oxide portion.

8. A device for determining the carbon content in ash according to the method set forth in any one of claims 1 to 7, comprising at least one radiation source (9) and at least one radiation detector or receiver (10) provided within a sensor body including a radiation-pervious window (5, 6), wherein it is feasible to expose a respective ash sample (17) to electromagnetic radiation emitted from the radiation source (9) and, in particular, light, to measure the radiation reflected by the ash sample (17) by the aid of the radiation detector or receiver (10) and to evaluate the thus detected reflectivity of the ash as a measure of the carbon content, **characterized in that** an ash sample receptacle (21) is arranged opposite the sensor body and the sensor body, for the carbon-particle comminution procedure aimed to pound the ash sample (17) contained in the receptacle (21), is designed as a stamp (2) movably mounted in a frame or housing (3) carrying the ash sample receptacle, and connected with an actuating means (24, 25), reflectivity measurements thus being realizable with different carbon particle sizes by the aid of the radiation detector or receiver (10).

9. A device according to claim 8, **characterized in that** the stamp (2) is coupled with a linear drive and, in particular, a pressure-medium cylinder (24), which is attached to the frame or housing (3) and serves to move the stamp to the ash sample receptacle (21) and away from the same.

10. A device according to claim 8 or 9, **characterized in that** the stamp (2) is coupled with a rotation drive (25) arranged within the frame or housing (3), to pound the ash (17) contained in the receptacle (21) by rotary movement.

11. A device according to any one of claims 8 to 10, **characterized in that** the stamp (2) is coupled with a reciprocating rotation drive (25) arranged within the frame or housing (3), to pound the ash (17) contained in the receptacle (21) by reciprocating rotary movements.

12. A device according to claim 10 or 11, **characterized in that** the rotation drive (25) comprises an electromagnet.

13. A device according to any one of claims 8 to 12, **characterized in that** the ash sample receptacle (21) is configured as a sample tray.

14. A device according to any one of claims 8 to 13, **characterized in that** the stamp (2) has a generally cylindrical form.

15. A device according to any one of claims 8 to 14, **characterized in that** the ash sample receptacle (21) is associated with at least one blow-off pipe (23) intended to blow off the pressed ground ash (17) after the reflection measurements.

16. A device according to any one of claims 8 to 15, **characterized in that** several radiation detectors or receivers (10) are arranged in a circular arrangement around a central radiation source (9).

17. A device according to claim 16, **characterized in that** one of the radiation detectors or receivers (10) is directly associated with the radiation source (9) to monitor its radiation emission and obtain a reference value for the reflection measurement.

18. A device according to claim 16 or 17, **characterized in that** two polarization filters (7, 8) rotated by 90° relative to their directions of polarization are concentrically provided on the window (5, 6).

19. A device according to any one of claims 8 to 18, **characterized in that** the stamp (2) is equipped with a water cooling body (13).

20. A device according to claim 16, **characterized in that** the central region (16) of the window (5, 6) adjacent to the central radiation source (9) is impervious to light.

21. A device according to claim 20, **characterized in that** a central radiation-pervious screen (16) in the form of a thin metal film is attached to the glass pane (6) of the window (5, 6).

22. A device according to any one of claims 8 to 19, **characterized in that** a radiation deflection element (216) is arranged in the optical path from the radiation source (9) to the ash sample (17), which radiation deflection element transforms a bundle of rays entering the radiation entry side of the radiation deflection element (216) into a bundle of rays having a generally annular cross section on the radiation exit side of the radiation deflection element (216).

23. A device according to claim 22, **characterized in that** the radiation deflection element (216) is comprised of a glass body (217; 217') which, on the radiation entry side, comprises a, for instance generally conical, depression (218, 128') oriented in the direction of the optical axis of the radiation source (9) and narrowing to a point tip.

24. A device according to claim 23, **characterized in that** the depression (218) has a circular cross section.

25. A device according to claim 23 or 24, **characterized in that** the depression (218') provided in the glass body (217') comprises a concavely curved and, in particular, spherically curved surface (219').

26. A device according to any one of claims 23 to 25, **characterized in that** the crest angle of the depression (218; 218') ranges from 60° to 120° and, preferably, is generally 90°.

27. A device according to any one of claims 23 to 26, **characterized in that** the glass body (217) has a generally plane or convex boundary surface (220; 220') on the radiation exit side.

28. A device according to any one of claims 23 to 27, **characterized in that** the glass body (217) is made of acrylic glass.

29. A device according to any one of claims 23 to 28, **characterized in that** the glass body (217, 217') with its outer peripheral surface (225) is glued into a retainer (12) eloxed in black at least on the area of fixation, by means of an optical adhesive whose fraction index corresponds to that of the glass body (217, 217') to such an extent that a total reflection is effectively suppressed.

**Revendications**

1. Procédé de détermination de la teneur en charbon de la cendre, notamment de la cendre volante se produisant dans l'épuration des gaz de fumée de centrales électriques thermiques, procédé dans lequel on expose un échantillon (17) de cendre à un rayonnement électromagnétique, notamment à de la lumière, on mesure le rayonnement réfléchi par l'échantillon (17) de cendre et l'on exploite le pouvoir de réflexion ainsi détecté de la cendre comme mesure pour la teneur en charbon, **caractérisé en ce que** l'on soumet l'échantillon (17) respectif de cendre à une opération de fragmentation en particules de charbon et on effectue au moins deux mesures du pouvoir de réflexion à des dimensions de particules du charbon différentes en prenant pour base les résultats de ces mesures de pouvoir de réflexion pour la détermination de la teneur en charbon.

2. Procédé suivant la revendication 1, **caractérisé en ce que** l'on fragmente l'échantillon (17) de cendre dans un récipient (21) à l'aide d'un poinçon (2).

3. Procédé suivant la revendication 1 ou 2, **caractérisé en ce que** l'on fragmente en partie l'échantillon (17) de cendre dès avant la première mesure du pouvoir de réflexion et on la fragmente davantage après cette mesure avant d'effectuer la mesure suivante du pouvoir de réflexion.

4. Procédé suivant l'une des revendications 1 à 3, **caractérisé en ce que** l'on prend comme base pour la détermination de la teneur en charbon la différence ($\Delta$R) entre les au moins deux mesures de pouvoir de réflexion et le résultat de la mesure ultérieure du pouvoir de réflexion.

5. Procédé suivant l'une des revendications 1 à 4, **caractérisé en ce que** l'on comprime l'échantillon (17) de cendre avant les mesures.

6. Procédé suivant l'une des revendications 1 à 5, **caractérisé en ce qu'**on effectue, en correction de la mesure de réflexion, une détermination de la teneur en oxyde de fer, par exemple au moyen d'une mesure de l'inductance.

7. Procédé suivant la revendication 6, **caractérisé en ce que** l'on remplit une bobine sans fer (80) de cendre et on prend la variation ($\Delta$L) d'inductance ainsi provoquée comme mesure de la proportion d'oxyde de fer.

8. Dispositif de détermination de la teneur en charbon de la cendre selon le procédé suivant l'une des revendications 1 à 7, comprenant au moins une source (9) de rayonnement et au moins un enregistreur ou un récepteur (10) de rayonnement dans un corps de détecteur qui a une fenêtre (5, 6) perméable au rayonnement, un échantillon (17) de cendre étant exposé à du rayonnement électromagnétique, notamment à de la lumière émise par la source (9) de rayonnement, le rayonnement réfléchi par l'échantillon (17) de cendre étant mesuré à l'aide l'enregistreur ou du récepteur (10) de rayonnement et le pouvoir de réflexion ainsi détecté de la cendre pouvant être exploité comme mesure de la teneur en charbon, **caractérisé en ce qu'**en face du corps formant détecteur est prévu un récipient (21) d'échantillon de cendre et le corps formant détecteur est constitué sous la forme d'un poinçon (2) destiné à fragmenter l'échantillon (17) de cendre dans le récipient (21) qui, pour l'opération de fragmentation des particules de charbon, est monté mobile dans un cadre ou un corps (3) portant le récipient d'échantillon de cendre et qui est relié à un dispositif (24, 25) d'entraînement et ainsi il est possible d'effectuer des mesures de pouvoir de réflexion pour des dimensions de particules de charbon différentes à l'aide de l'enregistreur ou du récepteur (10) de rayonnement.

9. Dispositif suivant la revendication 8, **caractérisé en ce que** le poinçon (2) est couplé à un entraînement linéaire prévu dans le cadre ou corps (3), notamment à un vérin (24) à fluide comprimé, et peut être ramené par celui-ci au récipient (21) d'échantillon de cendre.

10. Dispositif suivant la revendication 8 ou 9, **caractérisé en ce que** poinçon (2) est couplé à un entraînement (25) en rotation monté dans le cadre ou le corps (3) et destiné à fragmenter la cendre (17) dans le récipient (21) par un mouvement de rotation.

11. Dispositif suivant l'une des revendications 8 à 10, **caractérisé en ce que** le poinçon (2) est couplé à un dispositif (25) d'entraînement en rotation allant et venant monté dans le cadre ou le corps (3) et destiné à fragmenter la cendre (17) dans le récipient (21) par des mouvements de rotation dans un sens et dans l'autre.

12. Dispositif suivant la revendication 10 ou 11, **caractérisé en ce que** l'entraînement (25) en rotation est réalisé par un électroaimant.

13. Dispositif suivant l'une des revendications 8 à 12, **caractérisé en ce que** le récipient (21) d'échantillon de cendre est formé par une cuvette d'échantillon.

14. Dispositif suivant l'une des revendications 8 à 13, **caractérisé en ce que** le poinçon est d'une manière générale cylindrique.

15. Dispositif suivant l'une des revendications 8 à 14, **caractérisé en ce que** le récipient (21) d'échantillon de centre est associé au moins à un tube (23) d'insufflation de la cendre (17) comprimée et broyée après les mesures de réflexion.

16. Dispositif suivant l'une des revendications 8 à 15, **caractérisé en ce que** plusieurs enregistreurs ou récepteurs (10) de rayonnement sont disposés suivant un agencement circulaire autour d'une source (9) centrale de rayonnement.

17. Dispositif suivant la revendication 16, **caractérisé en ce que** l'un des enregistreurs ou récepteurs (10) de rayonnement est associé directement à la source (9) de rayonnement pour le contrôle de son émission de rayonnement et pour l'obtention d'une valeur de référence pour la mesure de la réflexion.

18. Dispositif suivant la revendication 16 ou 17, **caractérisé en ce qu'**il est monté sur la fenêtre concentriquement deux filtres (7, 8) de polarisation tournés à 90° pour ce qui concerne leur direction de polarisation.

19. Dispositif suivant l'une des revendications 8 à 18, **caractérisé en ce que** le poinçon (2) est muni d'un dispositif (13) de refroidissement à l'eau.

20. Dispositif suivant la revendication 16, **caractérisé en ce que** la partie (16) médiane de la fenêtre (5, 6) voisine de la source (9) centrale de rayonnement n'est pas transparente à la lumière.

21. Dispositif suivant la revendication 20, **caractérisé en ce que** sur la vitre (6) de la fenêtre (5, 6) est monté un écran (16) central perméable au rayonnement sous la forme d'une mince couche métallique.

22. Dispositif suivant l'une des revendications 8 à 19, **caractérisé en ce que** dans le trajet du faisceau allant de la source (9) de rayonnement à l'échantillon (17) de cendre est monté un élément (216) de déviation du rayonnement qui modifie la forme d'un faisceau de rayonnement entrant dans le côté entrée pour le rayonnement de l'élément (216) de déviation du rayonnement en un faisceau de rayonnement d'une manière générale annulaire en section transversale du côté sortie du rayonnement de l'élément (216) de déviation du rayonnement.

23. Dispositif suivant la revendication 22, **caractérisé en ce que** l'élément (216) de déviation du rayonnement est un corps (217; 217') en verre qui a, du côté d'entrée du rayonnement, une cavité (218, 218') dirigée dans la direction de l'axe optique de la source (9) de rayonnement se rétrécissant en une pointe ponctuelle, par exemple d'une manière générale de forme conique.

24. Dispositif suivant la revendication 23, **caractérisé en ce que** la cavité (218) a une section transversale circulaire.

25. Dispositif suivant la revendication 23 ou 24, **caractérisée en ce que** la cavité (218') du corps (217') en verre a une surface latérale (219') incurvée, notamment sphérique.

26. Dispositif suivant l'une des revendications 23 à 25, **caractérisé en ce que** l'angle au sommet de la cavité (218 ; 218') est de l'ordre de 60° à 120° et de préférence est en général de 90°.

27. Dispositif suivant l'une des revendications 23 à 26, **caractérisé en ce que** le corps (217) en verre a, du côté de la sortie du rayonnement, une surface (220 ; 220') limite généralement plane ou convexe.

28. Dispositif suivant l'une des revendications 23 à 27, **caractérisé en ce que** le corps (217) en verre est en verre acrylique.

29. Dispositif suivant l'une des revendications 23 à 28, **caractérisé en ce que** le corps (217, 217') en verre est collé par sa surface (225) périphérique extérieure, à l'aide d'une colle optique, dont l'indice de réfraction correspond si bien à celui du corps (217, 217') en verre que la réflexion totale est supprimée d'une manière efficace, à une pièce de fixation (12) anodisée au moins sur la surface de fixation.

FIG.1

# FIG.2

FIG.3

FIG.4

FIG.6

FIG.5

FIG.7

FIG.8

FIG. 9A          FIG. 9B          FIG. 9C

FIG. 9D          FIG. 9E          FIG. 9F

FIG. 9G          FIG. 9H          FIG. 9I

FIG.9

FIG.10

FIG.11

**FIG. 12**

FIG. 12A

FIG. 12 B

FIG. 12 C

FIG.13

FIG.14

FIG.15

EP 0 714 023 B1

FIG.16

EP 0 714 023 B1

Inp $R_b$; $\Delta R$; $\Delta L$;

$t = 0.5 (\Delta L - 70)$ $\qquad$ $u = (\Delta R - 0.12)^2$
$r = (R_b - 8)/17$

$\Delta L > 40$ ? $\qquad$ JA $\qquad$ NEIN

$w = t + \sqrt{t^2 + 5000ru/(1-r^2)}$ $\qquad$ $T = (\Delta L - 40)/2$

$w < 3$ ? $\qquad$ JA $\qquad$ NEIN $\qquad$ $w = T + \sqrt{T^2 + 2000ru/(1-r)^2}$

$w = 3$ $\qquad$ $\Delta L > 20$ ? $\qquad$ JA $\qquad$ NEIN

$w > 16 - \Delta L/5.6$ ? $\qquad$ JA $\qquad$ NEIN

$w = 16 - \Delta L/5.6$

$C_1 = w(1-r)^2/2r$

FIG.17